# EUROPEAN PATENT SPECIFICATION

(11) **EP 3 979 470 B1**
(45) Date of publication and mention of the grant of the patent: **02.12.2026**
(21) Application number: 21194448.3
(22) Date of filing: 02.09.2021
(51) Int. Cl.: H02K 5/20, H02K 1/18, H02K 5/173, H02K 7/14, H02K 9/06, H02K 9/16

(54) **ELECTRIC MOTOR**
ELEKTROMOTOR
MOTEUR ÉLECTRIQUE

(30) Priority: 05.10.2020 KR 20200128155
(43) Date of publication of application: 06.04.2022
(73) Proprietor: LG Electronics Inc., SEOUL 07336 (KR)
(72) Inventor: JUNG, Taeyong, 08592 Seoul (KR); LEE, Jeongho, 08592 Seoul (KR); CHOI, Joongkeun, 08592 Seoul (KR); CHO, Seongho, 08592 Seoul (KR)
(74) Representative: Vossius & Partner Patentanwälte Rechtsanwälte mbB

(56) References cited:
- EP-A1- 0 416 468
- EP-B1- 2 601 730
- WO-A1-2018/069030
- WO-A1-2018/163264
- WO-A1-2018/234740
- WO-A1-2020/174878
- CN-B- 103 066 753
- DE-A1- 102015 216 226
- DE-A1- 3 423 319
- FR-A1- 3 078 844
- JP-A- 2007 113 477
- JP-A- 2016 153 636
- JP-A- H0 386 037
- KR-A- 20150 140 200
- US-A1- 2015 244 235
- US-A1- 2016 037 984
- US-A1- 2018 160 872

## Description

### BACKGROUND

### 1. Technical Field

The present disclosure relates to a superfast small motor for driving a fan.

### 2. Description of the Related Art

A motor (or electric motor) may be used in a home appliance such as a cleaner or a hair dryer. A cleaner or a hair dryer may use a motor as a power source to rotate a fan so as to suck air containing dust or create a flow of air for drying hair. For example, a fan motor may be configured in combination of a fan and a motor, and the fan may receive power from the motor to generate an air flow. A cleaner or a hair dryer may be used by a user while being held with a hand. In order to enhance user's portability and convenience, reduction of the size and weight of a cleaner or a hair dryer is required. To this end, in addition to the reduction of the size and weight of the motor, an output of the motor should be improved. In addition, high-speed rotation is essential for a motor.

US 2018/0363669 A1 (hereinafter, Patent Literature 1) discloses an electric device. The electric device in Patent Literature 1 includes a stator assembly, a rotor assembly, and a supporter body. The stator assembly is supported by an elongated central portion of the supporter body without a cylindrical housing. In Patent Literature 1, since there is no housing surrounding the outside of the stator assembly, air resistance due to friction between the air and the housing is small, and thus relatively low flow resistance is caused when air flows along a flow path passing through the motor.

However, in general, a motor accommodates a stator and a rotor assembly inside a housing. This structure narrows an inner flow path of the housing through which air can flow. For this reason, when the air flows through the inside of the housing of the motor, flow resistance of the air increases and a flow loss occurs.

WO 2021/044115 A1 (hereinafter, Patent Literature 2) discloses a compressor having a flow guide in an air inlet. In Patent Literature 2, an impeller is not disposed between a first bearing and a second bearing but is disposed at a downstream side of the second bearing. For this reason, the impeller generates a larger rotational load on the second bearing compared to the first bearing, thereby reducing the lifespan of the second bearing. In addition, the second bearing is disposed at an upstream side of the second bearing, which causes an increase in an amount of foreign substances introduced into the second bearing.

JP 2020-143589A (hereinafter, Patent Literature 3) discloses an electric blower and an electric cleaner. Patent Literature 3 does not include a bypass flow path bypassing a stator inside a housing. However, as for Patent Literature 3, when air passes through the stator, the air moves to a narrow space between stator coils wound on a stator core, and flow resistance is increased accordingly. This makes it impossible to secure a sufficient suction flow rate by an impeller.

KR 2210012B1 (hereinafter, Patent Literature 4) discloses a motor assembly and a cleaner having the same. In Patent Literature 4, a stator assembly is disposed at a downstream side of an impeller. However, Patent Literature 4 requires a guide structure for introducing air into a stator, makes a flow path structure complicated, and causes high flow resistance. In addition, the temperature of air is increased due to an impact of external air against the impeller. When the air with the temperature increased is introduced, it lowers a cooling performance of the stator.

KR 1995-0028578A (hereinafter, Patent Literature 5) discloses a fan motor for a vacuum cleaner. In Patent Literature 5, a stator assembly is disposed at a downstream side of an impeller. However, in Patent Literature 5, when external air is sucked by the impeller, the air increases in temperature due to collision with the impeller. Due to an introduction of such heated air, the stator is deteriorated. In addition, a guide structure for introducing air into the stator is required and a flow path is curved from outside to inside of the stator, which causes high flow resistance.

FR 3078844 A1 discloses an electric machine comprising a rotor, a stator, an outer casing and a means of cooling the stator.

CN 103 066 753 B and WO 2018/234740 A1 disclose a bypass flow path.

### SUMMARY

The present disclosure describes an electric motor having a structure capable of solving those problems and other drawbacks.

A first object of the present disclosure is to provide an electric motor having a structure that can minimize flow resistance of air, which occurs when the air flows through the motor, even when employing a housing for accommodating a stator assembly and the like.

A second object of the present disclosure is to provide an electric motor having a structure that can improve cooling performance.

A third object of the present disclosure is to provide an electric motor having a structure that can efficiently support the motor while including a bypass flow path.

A fourth object of the present disclosure is to provide an electric motor having a structure that can optimize uniform flow distribution of a bypass flow path.

A fifth object of the present disclosure is to provide an electric motor having a structure that can simplify a structure of a member for achieving those aspects.

A sixth object of the present disclosure is to provide an electric motor having a structure that can be applied to other types of motors while achieving those aspects.

These objects are achieved with the features of the electric motor according to independent claim 1. Preferred embodiments are defined in the dependent claims.

In order to achieve the first object described above, an electric motor according to the present disclosure includes a bypass flow path defined in a housing to bypass a flow path penetrating through an inside of the electric motor, so that air can be guided to flow in the bypass flow path with small flow resistance.

In order to achieve the second object described above, an electric motor according to the present disclosure includes a bypass flow path between a housing and a stator, so that air passing through the electric motor can be brought into contact with an outer surface of the stator, thereby increasing a cooling area of the stator to be cooled by the air.

In order to achieve the third object described above, support portions spaced apart in a circumferential direction of a stator core can support an outer surface of the stator core at three points, thereby stably supporting the stator with a minimum size.

In order to achieve the fourth object described above, a plurality of bypass flow paths are disposed to be spaced apart at equal intervals along an inner circumferential surface of a housing, so that a flow rate of air bypassed can be equally distributed by the bypass flow paths.

In order to achieve the fifth object described above, a plurality of bypass flow paths are defined to surround a stator and an inner surface of a housing can be recessed in a thickness direction to define the bypass flow paths, which may result in simplifying a structure.

In order to achieve the sixth object described above, a plurality of bypass flow paths are configured such that not only air but also other fluids such as cooling water can flow therethrough, thereby being applicable to other types of motors for cooling as well as a fan motor.

An electric motor according to one implementation includes a housing, a stator assembly, a rotor assembly, an impeller, an inner flow path, and a bypass flow path.

The stator assembly is accommodated in the housing. The rotor assembly is rotatably mounted inside the stator assembly. The impeller receives power from the rotor assembly to generate a flow of air.

The inner flow path is defined in the stator assembly so that a part of the air passes through the stator assembly. The bypass flow path is provided at an inner side of the housing and disposed at an outer side of the stator assembly so that another part of the air can bypass the stator assembly.

With the configuration, most of air flowing into the housing from the outside of the housing can move through the bypass flow path rather than the inner flow path having high flow resistance, thereby minimizing flow resistance and flow loss.

In one example related to the present disclosure, supporting portions may be provided at an inner side of the housing to support the stator assembly.

In one example related to the present disclosure, a plurality of supporting portions may protrude radially inward from an inner circumferential surface of the housing to support an outer circumferential surface of the stator assembly.

The bypass flow path may extend between the plurality of supporting portions in a circumferential direction of the housing and penetrate through the housing in an axial direction of the housing.

In one example related to the present disclosure, a supporting rib may extend in a circumferential direction to surround an outer circumferential surface of the stator assembly, so as to connect inner ends of the plurality of supporting portions.

The bypass flow path may be defined between the inner circumferential surface of the housing and an outer circumferential surface of the supporting rib.

In one example related to the present disclosure, the bypass flow path may be formed in any one of a ring shape, an arcuate shape, and a polygonal shape.

In one example related to the present disclosure, the bypass flow path may be provided in plurality at an inner side of the housing. The plurality of bypass flow paths may be spaced apart from one another at equal intervals in the circumferential direction of the housing.

In one example related to the present disclosure, the bypass flow path may have a circumferential length that is longer than a radial width of the bypass flow path and a circumferential width of the supporting portion.

The stator assembly is disposed at an upstream side of the impeller based on a flowing direction of the air.

With the configuration, cold air can first flow along the stator assembly from the outside of the housing, and then pass through the impeller, which may result in improving cooling performance of the stator assembly.

The housing includes a first accommodating part and a second accommodating part. The first accommodating part accommodates the rotor assembly and the stator assembly.

The second accommodating part is disposed at a downstream side of the first accommodating part based on a flowing direction of the air, and accommodates the impeller.

The bypass flow path is defined between an inner circumferential surface of the first accommodating part and an outer circumferential surface of the stator assembly.

In accordance with the invention, the housing includes a first accommodating part, a second accommodating part, a neck part, and an inclined part.

The first accommodating part accommodates the rotor assembly and the stator assembly. The second accommodating part is disposed at a downstream side of the first accommodating part based on a flowing direction of the air, and accommodates the impeller.

The neck part is disposed between the first accommodating part and the second accommodating part, and has a smaller diameter than a diameter of the first accommodating part.

The inclined part is inclined from the first accommodating part to the neck part.

The inclined part can gradually decrease a flow cross-sectional area of air flowing from the first accommodating part to the neck part, thereby minimizing flow resistance.

The bypass flow path is defined between an inner circumferential surface of the first accommodating part and an outer circumferential surface of the stator assembly.

With the configuration, air that has passed through the bypass flow path can merge with air that has passed through the inner flow path at the inclined part.

In one example related to the present disclosure, the impeller may include a hub and a plurality of blades. The hub may have an outer circumferential surface that is inclined.

The plurality of blades may protrude spirally from an outer circumferential surface of the hub toward an inner circumferential surface of the second accommodating part.

In one example related to the present disclosure, the rotor assembly may include a rotating shaft, a permanent magnet, a first bearing, and a second bearing.

The rotating shaft may be rotatably mounted to a central portion of the housing. The permanent magnet may be mounted on the rotating shaft. The first bearing may support one end portion of the rotating shaft. The second bearing may support another end portion of the rotating shaft.

The impeller may be rotatably mounted on the rotating shaft, and may be located at a downstream side of the permanent magnet based on a flowing direction of the air. The impeller may be disposed between the first bearing and the second bearing.

In one example related to the present disclosure, the housing may include a first accommodating part, a second accommodating part, and an intake part.

The first accommodating part may accommodate the rotor assembly and the stator assembly. The second accommodating part may be disposed at a downstream side of the first accommodating part based on a flowing direction of the air, and accommodate the impeller. The intake part may be disposed at an upstream side of the first accommodating part based on a flowing direction of the air. The intake part may include a plurality of side holes. The plurality of side holes may communicate with the outside of the housing. The intake part may suck the air from the outside of the housing into the stator assembly.

The bypass flow path may communicate with the plurality of side holes.

In one example related to the present disclosure, the stator assembly may include a back yoke, a plurality of teeth, and a stator coil. The back yoke may be formed in a circular ring shape. The plurality of teeth may be mounted on an inner circumferential surface of the back yoke.

The plurality of stator coils may be wound on the plurality of teeth, respectively.

The back yoke may be disposed between the bypass flow path and the inner flow path.

The inner flow path may be formed through an inside of the back yoke in an axial direction. The bypass flow path may be defined through between an inner circumferential surface of the housing and an outer circumferential surface of the back yoke in the axial direction.

In one example related to the present disclosure, the electric motor may further include a first housing cover and a second housing cover. The first housing cover may be mounted to one side of the housing, and may include a first bearing disposed therein.

The second housing cover may be mounted to another side of the housing, and may include a second bearing disposed therein. The impeller may be disposed between the first bearing and the second bearing. With the configuration, structural stability can be improved when the impeller rotates.

In one example related to the present disclosure, the first housing cover may include an outer ring portion, a first bearing accommodating portion, a plurality of connecting portions, and a plurality of axial through-holes.

The first bearing accommodating portion may be disposed at an inner central portion of the outer ring portion and accommodate the first bearing.

The plurality of connecting portions may extend radially from an inner circumferential surface of the outer ring portion toward an outer circumferential surface of the first bearing accommodating portion, so as to connect the outer ring portion and the first bearing accommodating portion.

The plurality of axial through-holes may be formed through between the plurality of connecting portions in an axial direction.

The bypass flow path and the axial through-holes may be disposed to overlap each other in the axial direction, and communicate with each other.

In one example related to the present disclosure, the second housing cover may include an outer cover, a first inner hub, a second bearing accommodating portion, and first vanes.

The first inner hub may be disposed at an inner side of the outer cover. The second bearing accommodating portion may protrude from one side of the first inner hub toward the impeller and accommodate the second bearing.

The plurality of first vanes may protrude spirally from an outer circumferential surface of the first inner hub toward an inner circumferential surface of the outer cover, so as to connect the outer cover and the first inner hub.

With the configuration, the plurality of first vanes may be an axial flow type. The first inner hub may be formed in a cylindrical shape.

In one example related to the present disclosure, the second housing cover may further include a second inner hub and a plurality of second vanes.

The second inner hub may be accommodated inside the outer cover and disposed in series with the first inner hub. The plurality of second vanes may protrude spirally from an outer circumferential surface of the second inner hub toward an inner circumferential surface of the outer cover.

With the configuration, the plurality of second vanes may be an axial flow type. The second inner hub may be formed in a cylindrical shape.

Since the first and second vanes of the present disclosure are axial flow types, those vanes can be easily made through injection molding. In addition, flow resistance can be reduced as air flows along the axial vanes.

In one example related to the present disclosure, in order to couple the housing and the second housing cover, a first flange may protrude outward from one side of the housing in a radial direction.

A second flange may protrude outward from another side of the second housing cover in the radial direction,

The first flange and the second flange may be disposed to overlap each other in an axial direction, and coupled to each other.

In one example related to the present disclosure, the electric motor may further include an inverter. The inverter may include an IGBT and a capacitor to control the speed of the electric motor.

The inverter may include a PCB, a plurality of first coupling portions, a plurality of second coupling portions, and a plurality of lateral flow paths.

The IGBT and the capacitor may be mounted on the PCB. The PCB may be spaced apart from one side of the first housing cover in an axial direction.

The plurality of first coupling portions may protrude from the outer ring portion toward the PCB. The plurality of second coupling portions may protrude from an edge portion of the PCB toward the plurality of first coupling portions, respectively, to be coupled to the plurality of first coupling portions.

The plurality of lateral flow paths may be disposed between the PCB and the first housing cover to allow the air to be introduced. The plurality of lateral flow paths may be formed through between the plurality of second coupling portions in a radial direction.

The plurality of lateral flow paths and the plurality of axial through-holes may communicate with each other.

With the configuration, external air of the housing can be introduced into the PCB through the lateral flow paths to cool semiconductor devices such as the IGBT and the capacitor.

According to implementations of the present disclosure, the following effects can be provided.

First, bypass flow paths for bypassing a stator assembly can further be provided inside a housing, thereby minimizing flow resistance and flow loss of air.

Here, since the plurality of bypass flow paths expand a movement area of air, the flow resistance and flow loss of the air can be reduced, compared to the case where only inner flow paths of the stator assembly are provided as a flow path penetrating through the housing.

Bypass flow paths can have much lower flow resistance and flow loss than those in inner flow paths penetrating through a stator assembly. Therefore, even if a cross-sectional area of the bypass flow paths is smaller than that of the inner flow paths of a back yoke, more air can flow into the bypass flow paths with the lower resistance.

Accordingly, the bypass flow paths can secure a greater flow rate of air, thereby improving cooling performance of stator coils and the like.

Although the bypass flow paths have a very small cross-sectional area, the great effect of reducing the flow resistance and the flow loss can be provided. This may allow high cooling performance to be secured by the bypass flow paths with the small cross-sectional area.

Third, a plurality of supporting portions that partially or entirely surround a stator core can be disposed at an inner side of a housing. Accordingly, a motor can be efficiently supported even if the supporting portions are small in size.

Fourth, a plurality of bypass flow paths may be spaced apart from a plurality of supporting portions at equal intervals in a circumferential direction, so as to evenly distribute a flow rate of air bypassing a stator assembly.

Fifth, a plurality of bypass flow paths and a plurality of supporting portions may be alternately disposed between an inner surface of a housing and an outer circumferential surface of a stator core, which may result in simplifying a flow path configuration of a motor even if the bypass flow paths are included in the housing.

Sixth, bypass flow paths may be formed inside the housing, separately from inner flow paths of a stator assembly. Those aforementioned effects can be achieved even by forming the bypass flow paths inside a motor housing of a vacuum cleaner, an air dryer, or the like.

Accordingly, the general purpose of the housing including the bypass flow paths can be improved. In addition, a user can apply a motor having a structure, which merely further includes bypass flow paths, to a motor of an existing cleaner or air dryer, even without using a separate motor cooling device.

Accordingly, the performance and durability of the motor can be improved.

### BRIEF DESCRIPTION OF THE DRAWINGS

FIG. 1 is an exploded perspective view illustrating an exploded state of an electric motor in accordance with the present disclosure.
FIG. 2 is an exploded perspective view illustrating an exploded state of a rotor assembly of FIG. 1.
FIG. 3 is an exploded perspective view illustrating an exploded state of a stator assembly of FIG. 1.
FIG. 4 is a cross-sectional view illustrating a coupled state of respective components of the electric motor of FIG. 1.
FIG. 5 is a conceptual view illustrating a state in which a stator assembly is accommodated in a housing in FIG. 4 and the remaining components are removed.
FIG. 6 is a planar view illustrating a state in which the stator assembly is supported by a support portion of the housing, taken along the line VI-VI in FIG. 5.
FIG. 7 is a cross-sectional view illustrating a structure in which a bypass flow path is defined between the housing and a stator, taken along the line VII-VII of FIG. 6.
FIG. 8 is a cross-sectional view illustrating a structure in which the stator assembly is partially supported at an inner side of the housing, taken along the line VIII-VIII of FIG. 4.
FIG. 9 is a cross-sectional view illustrating an internal structure of the housing with the stator assembly removed, taken along the line IX-IX in FIG. 6.
FIG. 10 is a cross-sectional view illustrating a structure of a supporting portion of a housing in accordance with another implementation of the present disclosure.
FIG. 11 is a cross-sectional view taken along the line XI-XI of FIG. 10, which illustrates an internal structure of the housing with the stator assembly removed.
FIG. 12 is a conceptual view illustrating an electric motor in accordance with another implementation of the present disclosure.
FIG. 13 is a conceptual view illustrating a structure in which a bypass flow path is formed in an arcuate shape, in accordance with still another implementation of the present disclosure.
FIG. 14 is a conceptual view illustrating a structure in which a bypass flow path is formed in a triangular shape, in accordance with still another implementation of the present disclosure.

### DETAILED DESCRIPTION OF THE IMPLEMENTATIONS

Hereinafter, one or more examples of an electric motor will be described in detail with reference to the accompanying drawings.

In the following description, in order to clarify the characteristics of the present disclosure, descriptions of some components may be omitted.

### 1. Definition of Terms

It will be understood that when an element is referred to as being "connected with" another element, the element can be connected with the another element or intervening elements may also be present.

In contrast, when an element is referred to as being "directly connected with" another element, there are no intervening elements present.

A singular representation used herein may include a plural representation unless it represents a definitely different meaning from the context.

The term "motor" used in the following description refers to a device, namely, an electric motor that receives energy such as electricity and converts it into a mechanical motion.

The term "fan motor" used in the following description refers to a motor that generates an airflow by turning a fan.

As used in the following description, the term "fan" refers to a rotating blade configured to form a flow of air.

The term "motor" used in the following description may be understood as a concept including a fan motor.

A "motor" used in the following description may provide power for a vacuum cleaner to suck air, or for a hair dryer to send air to a specific location.

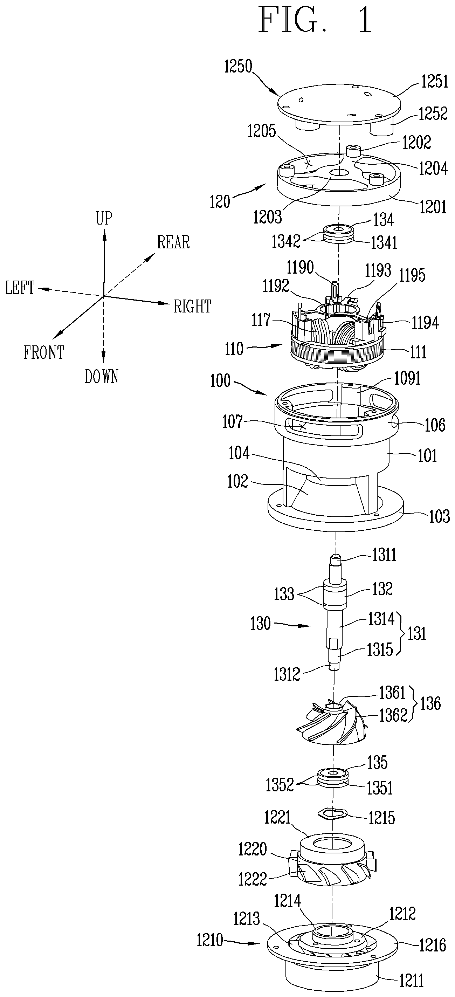

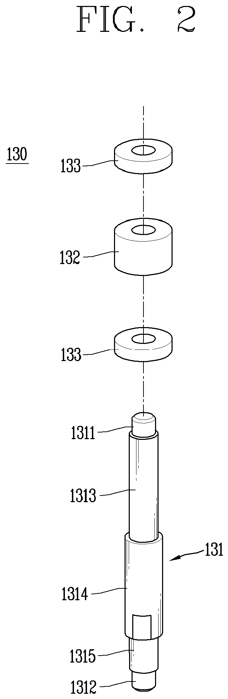

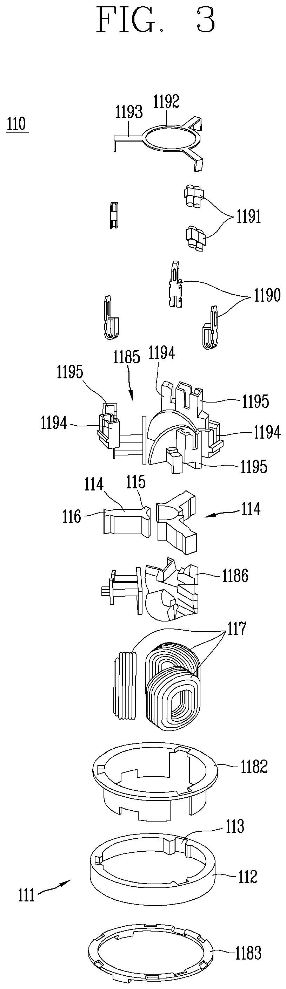

In the following description, an upper portion or an upper side (UP; see FIGS. 1 to 4) means a top in an up and down (vertical) direction, and a lower portion or a lower side (DOWN; see FIGS. 1 to 4) means a bottom in the vertical direction. The vertical direction may be oriented to be parallel to or equal to an axial direction of a rotating shaft or a lengthwise direction of a first accommodating part.

In this specification, a radial direction may include a front and rear (or back and forth) direction (FRONT/REAR; see FIGS. 1 to 4) and a left and right direction (LEFT/RIGHT; see FIGS. 1 to 4).

### 2. Description of Configuration of Electric Motor according to One Implementation

Hereinafter, a configuration of an electric motor according to an implementation of the present disclosure will be described with reference to the accompanying drawings.

An electric motor according to an implementation includes a housing 100, a stator assembly 110, a rotor assembly 130, an impeller 136, vanes 1213 and 1222, bearings 134 and 135, and housing covers 120 and 1210.

### (1) Housing (100)

The housing 100 defines appearance of the electric motor. An inverter 1250 may be disposed at an upper side of the housing 100.

The inverter 1250 may include a printed circuit board (PCB) 1251, and semiconductor devices such as an IGBT, a capacitor, and the like. The inverter 1250 may control the speed of the motor. The semiconductor devices may be mounted on the PCB 1251.

A part or portion of the housing 100 may be formed in a cylindrical shape. Another part of the housing 100 may be formed in a conical shape. The housing 100 may include a first accommodating part 101, a second accommodating part 102, and a neck part 104. The first accommodating part 101 may be disposed in an upper portion of the housing 100. The first accommodating part 101 may be formed in a cylindrical shape.

A center of the housing 100 may be disposed to correspond to a center of the rotating shaft 131.

The first accommodating part 101 may have an accommodation space therein to accommodate the rotor assembly 130 and the stator assembly 110.

The first accommodating part 101 may be formed such that its diameter is kept constant in the vertical direction.

The first accommodating part 101 may be formed such that its cross-sectional area in the radial direction is constantly maintained.

An intake part 106 may be disposed on an upper portion of the first accommodating part 101. The intake part 106 may be integrally formed on the upper portion of the first accommodating part 101.

The intake part 106 may be configured to suck air into the housing 100. The intake part 106 may be connected to communicate with the outside of the housing 100.

The intake part 106 may be formed in a circular ring shape. The intake part 106 may have a diameter larger than that of the first accommodating part 101. A stepped portion may extend outward in the radial direction from an upper end of the first accommodating part 101 to have a larger diameter, so as to be connected to a lower end of the intake part 106.

The intake part 106 may include a plurality of side holes 107. The plurality of side holes 107 may be formed through a circumferential surface of the intake part 106 in the radial direction. The plurality of side holes 107 may be disposed to be spaced apart from one another in a circumferential direction of the intake part 106. The plurality of side holes 107 may extend long along the circumferential direction of the intake part 106. Each of the plurality of side holes 107 may be formed such that a circumferential length is longer than a vertical height.

The plurality of side holes 107 may be spaced apart from one another at equal intervals in the circumferential direction of the intake part 106. A distance between adjacent side holes 107 may be shorter than a length of the side hole 107.

The side hole 107 may be formed in a rectangular shape when viewed from an outer side of the housing 100 in the radial direction. Each vertex portion of the side hole 107 may be rounded into a curved shape.

The intake part 106 may be formed in a penetrating manner in the vertical direction.

With the configuration, air may move radially through the plurality of side holes 107 from the outside of the housing 100 to be introduced into the housing 100. In addition, the air may be introduced into the housing 100 in the axial direction from the upper portion of the intake part 106.

The housing covers 120 and 1210 may be provided on upper and lower portions of the housing 100, respectively. The housing covers 120 and 1210 may include a first housing cover 120 and a second housing cover 1210. The first housing cover 120 may be disposed on the upper portion of the housing 100. The first housing cover 120 may be mounted on the upper portion of the intake part 106. The first housing cover 120 may be formed in a circular ring shape.

The first housing cover 120 may include an outer ring portion 1201, a first bearing accommodating portion 1203, and a connecting portion 1204. The outer ring portion 1201 may define an outermost side surface of the first housing cover 120. The outer ring portion 1201 may be formed such that a height is relatively smaller than a diameter.

The first bearing accommodating portion 1203 may be disposed at a central part of the outer ring portion 1201. The first bearing accommodating portion 1203 may be formed in a cylindrical shape. The first bearing accommodating portion 1203 may have an accommodation space to accommodate a first bearing 134.

The first bearing accommodating portion 1203 may have a height (thickness) that is the same as the height of the outer ring portion 1201. A through-hole may be formed through an upper portion of the first bearing accommodating portion 1203. The first bearing accommodating portion 1203 may surround an outer circumferential surface of the first bearing 134.

The first bearing 134 may be implemented as a ball bearing. A first holder 1341 may be coupled to the outer circumferential surface of the first bearing 134 so as to surround the first bearing 134. The first holder 1341 may be formed in a circular ring shape.

A first O-ring 1342 may be installed on an outer circumferential surface of the first holder 1341. The first O-ring 1342 may be provided by one or in plurality. The first O-rings 1342 may be disposed in a spaced manner along a lengthwise direction of the first holder 1341. A first O-ring mounting groove may be formed in the outer circumferential surface of the first holder 1341. The first O-ring 1342 may be fixedly inserted into the first O-ring mounting groove. The first O-ring 1342 may be disposed in close contact between an inner circumferential surface of the first bearing accommodating portion 1203 and the outer circumferential surface of the first holder 1341. The first O-ring 1342 may have a circular cross-sectional shape. At least a portion of the circular cross-section of the first O-ring 1342 may protrude from the first O-ring mounting groove to be in close contact with the inner circumferential surface of the first bearing accommodating portion 1203. The first O-ring 1342 may be made of a rubber material having elasticity. According to the configuration, the first O-ring 1342 can adjust concentricity of the two bearings 134 and 135 supporting both ends of the rotating shaft 131, together with a second O-ring to be explained later. The first O-ring 1342 and the second O-ring can extend the lifespan of the bearings 134 and 135.

The first O-ring 1342 may provide an attenuating effect of absorbing vibration transferred from the bearing 134 during the rotation of the rotating shaft 131 and mitigating an impact.

The first bearing accommodating portion 1203 may have a diameter that is smaller than the diameter of the outer ring portion 1201.

A plurality of connecting portions 1204 may be provided between the outer ring portion 1201 and the first bearing accommodating portion 1203.

The connecting portions 1204 may extend in the radial direction between the outer ring portion 1201 and the first bearing accommodating portion 1203, so as to connect the outer ring portion 1201 and the first bearing accommodating portion 1203.

The connecting portion 1204 may have a rectangular cross-sectional shape.

The plurality of connecting portions 1204 may be disposed to be spaced apart from one another at equal intervals along the circumferential direction of the outer ring portion 1201. The implementation exemplarily illustrates three connecting portions 1204.

The first housing cover 120 may include a plurality of axial through-holes 1205. The plurality of axial through-holes 1205 may be formed in a penetrating manner between the adjacent connecting portions 1204 in the axial direction (or in the vertical direction).

External air of the housing 100 may be introduced into the housing 100 through the plurality of axial through-holes 1205.

A plurality of first coupling portions 1202 may protrude upward from an upper portion of the outer ring portion 1201. The first coupling portions 1202 may be disposed on extension lines of the connecting portions 1204, respectively. The first coupling portions 1202 may protrude in a cylindrical shape.

The PCB 1251 may have a disk shape. The PCB 1251 may be axially spaced apart from the first housing cover 120. The PCB 1251 may be disposed to overlap the first housing cover 120 in the axial direction.

A plurality of second coupling portions 1252 may protrude downward from a lower surface of the PCB 1251. The second coupling portions 1252 may surround and accommodate the first coupling portions 1202, respectively. The second coupling portion 1252 may be formed in a cylindrical shape having a larger diameter than the first coupling portion 1202.

The second coupling portion 1252 may extend such that its height in the axial direction or the vertical direction is higher than the height of the first coupling portion 1202.

The plurality of first and second coupling portions 1202 and 1252 may be disposed to be spaced apart from one another at equal intervals in the circumferential direction of the PCB 1251.

According to the configuration, the first coupling portion 1202 and the second coupling portion 1252 may form a pair to be fitted to each other, so that the PCB 1251 can be coupled to the first housing cover 120.

In addition, a plurality of lateral flow paths 1253 may be defined between the first housing cover 120 and the PCB 1251.

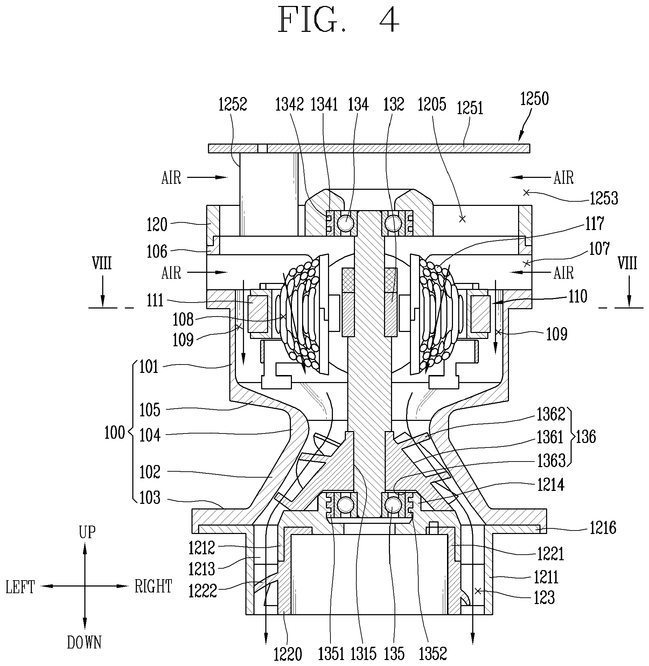

The plurality of lateral flow paths 1253 (refer to FIG. 4) may be defined through between the plurality of first and second coupling portions 1202 and 1252 in the radial direction. The height of the plurality of lateral flow paths 1253 may be defined by the heights of the first and second coupling portions 1202 and 1252. The plurality of lateral flow paths 1253 may be defined by the distances between the plurality of first and second coupling portions 1202 and 1252.

The plurality of lateral flow paths 1253 may be disposed at the upper portion of the plurality of side holes 107.

The lateral flow paths 1253 and the side holes 107 may overlap each other, respectively, in the vertical direction or the axial direction. In the specification, the vertical (up and down) direction may be understood as the same direction as the axial direction.

The lateral flow paths 1253 and the side holes 107 may be connected to communicate with the axial through-holes 1205 of the first housing cover 120, respectively.

The lateral flow paths 1253 and the side holes 107 may be formed such that their circumferential lengths extend at the same angle.

A circumferential length of an outermost portion of the axial through-hole 1205 may be formed to correspond to the circumferential length of the lateral flow path 1253 and the side hole 107 at the same angle.

The implementation exemplarily illustrates that each of the side hole 107, the axial through-hole 1205, and the lateral flow path 1253 are provided by three in number.

Three lateral flow paths 1253 and three side holes 107 may be disposed on the upper portion and the lower portion of the first housing cover 120, respectively.

With the configuration, external air of the housing 100 may be introduced into the lower surface of the PCB 1251 through the three lateral flow paths 1253 to cool the semiconductor devices (e.g., IGBT, capacitor, etc.) of the inverter 1250, and then may flow into the housing 100 through the three axial through-holes 1205 of the first housing cover 120.

In addition, the external air of the housing 100 may be introduced into an inner space of the intake part 106 through the three side holes 107 to cool the stator assembly 110.

The air introduced into the inner space of the intake part 106 through the side holes 107 may merge with the air that has passed through the axial through-holes 1205.

As such, the air introduced through the lateral flow paths 1253 and the air introduced through the side holes 107 may move along an inner flow path of the housing 100 and pass through the housing 100 in the axial direction.

The neck part 104 may be disposed between the first accommodating part 101 and the second accommodating part 102. The neck part 104 may have a diameter smaller than that of the first accommodating part 101.

An inclined part 105 is provided between a lower end of the first accommodating part 101 and the neck part 104.

The inclined part 105 may be formed such that its diameter gradually decreases from the first accommodating part 101 to the neck part 104.

The inclined part 105 may extend from the lower end of the first accommodating part 101 in the circumferential direction.

The inclined part 105 may be inclined downward from the lower end of the first accommodating part 101 toward the neck part 104.

The inclined part 105 may be disposed in a central portion of the housing 100 in the lengthwise direction of the housing 100.

Outer and inner surfaces of the inclined part 105 may be inclined at different inclinations.

The inner surface of the inclined part 105 may have a relatively greater inclination than the outer surface of the inclined part 105.

An inner portion where the first accommodating part 101 and the inclined part 105 are connected to each other may be rounded into a curved shape.

With the configuration, flow resistance of air that moves from the first accommodating part 101 to the inclined part 105 can be minimized.

The inner surface of the neck part 104 is rounded into a curved shape. The neck part 104 has a curvature smaller than a curvature of a connected portion between the first accommodating part 101 and the inclined part 105.

With the configuration, the inner surface of the neck part 104 can be formed in the curved shape, thereby minimizing air flow resistance when the air passes through the neck part 104 from the first accommodating part 101 and the second accommodating part 102.

The neck part 104 is connected to an upper end portion of the second accommodating part 102. The neck part 104 is a portion having the smallest diameter among diameters of the inner flow path passing through the inner side of the housing 100.

The second accommodating part 102 is formed in a conical shape. The second accommodating part 102 is formed such that its diameter gradually increases from the top to the bottom. The upper end of the second accommodating part 102 has a diameter that is smaller than that of the lower end of the second accommodating part 102.

A first flange 103 may be provided on a lower end portion of the second accommodating part 102. The first flange 103 may be formed in a ring shape. The first flange 103 may extend radially outward from the lower end of the second accommodating part 102. The first flange 103 may be formed on the lower end of the second accommodating part 102 in the circumferential direction.

The second accommodating part 102 may accommodate the impeller 136.

The impeller 136 may transmit rotational force received from the electric motor to a fluid, that is, air to rotate the air.

The impeller 136 may be mounted on one side of the rotating shaft 131 so as to rotate together with the rotating shaft 131.

The impeller 136 may generate an airflow by receiving power from the electric motor through the rotating shaft 131. The impeller 136 may allow air introduced into the first accommodating part 101 to be sucked into the second accommodating part 102.

The impeller 136 may be configured as a diagonal flow type impeller.

The impeller 136 may include a hub 1361 and a plurality of blades 1362.

For the diagonal flow type impeller 136, the hub 1361 may be formed in a conical shape. The hub 1361 may have an outer surface inclined at a preset angle so that its diameter increases from the top to the bottom.

A shaft coupling portion may be formed in the hub 1361. The shaft coupling portion may be formed in a cylindrical shape through the hub 1361 in the axial direction.

One side of the rotating shaft 131 may be inserted into the shaft coupling portion, and the impeller 136 may rotate together with the rotating shaft 131.

The plurality of blades 1362 may protrude from an outer surface of the hub 1361 toward the inner surface of the second accommodating part 102. The plurality of blades 1362 may extend spirally from the outer surface of the hub 1361 at a preset wrap angle. The wrap angle means an angle of a length by which the blade 1362 extends from the outer surface of the hub 1361 in the circumferential direction. As the wrap angle of the blade 1362 is smaller, air flow resistance of the impeller 136 may be more reduced.

In the implementation, in order to reduce the air flow resistance of the impeller 136, the wrap angle of the impeller 136 may preferably be set to 90 degrees or less.

According to the configuration, the impeller 136 can rotate relative to the second accommodating part 102 by the rotational force of the electric motor, thereby rotating air between the adjacent blades 1362. The rotating air may move from the top to the bottom of the second accommodating part 102 along the flow path between the outer surface of the hub 1361 and the inner surface of the second accommodating part 102.

The second housing cover 1210 may be mounted on a lower portion of the housing 100.

The second housing cover 1210 may include an outer cover 1211, a second flange 1216, a first inner hub 1212, a second bearing accommodating portion 1214, and a first vane 1213.

The outer cover 1211 may be formed in a hollow cylindrical shape. The outer cover 1211 may define an outer surface of the second housing cover 1210. The outer cover 1211 may have a constant diameter in the vertical direction.

The second flange 1216 may extend radially outward from an upper end (top) of the outer cover 1211.

The first flange 103 and the second flange 1216 may be disposed to overlap each other in the vertical direction.

The second flange 1216 may have a diameter that is slightly smaller than a diameter of the first flange 103.

The first flange 103 may have a thickness that is larger than a thickness of the second flange 1216.

A flange accommodating groove may be concavely formed in a lower surface of the first flange 103. The flange accommodating groove may accommodate the second flange 1216. The flange accommodating groove may be formed to be engaged with the second flange 1216.

The first flange 103 and the second flange 1216 each may include a plurality of coupling holes. The plurality of coupling holes may be formed through the first flange 103 and the second flange 1216, respectively, in a thickness direction.

The plurality of coupling holes formed through each of the first flange 103 and the second flange 1216 may be spaced apart from one another in the circumferential direction of the first and second flanges 103 and 1216.

With the configuration, the first and second flanges 103 and 1216 may be engaged with each other. Since coupling members such as screws are coupled to the first and second flanges 103 and 1216 through the plurality of coupling holes, the second housing cover 1210 can be coupled to the lower portion of the housing 100.

The first inner hub 1212 may be formed in a cylindrical shape. A diameter of the first inner hub 1212 may be smaller than a diameter of the outer cover 1211.

The first inner hub 1212 may be formed such that an upper portion is closed and a lower portion is opened.

An axial length of the outer cover 1211 may extend longer than an axial length of the first inner hub 1212.

An upper end portion of the first inner hub 1212 may protrude upward from the upper end of the first inner hub 1212. A center of the first inner hub 1212 may be disposed to coincide with a center of the outer cover 1211.

The second bearing accommodating portion 1214 may be disposed in the upper end portion of the first inner hub 1212. The second bearing accommodating portion 1214 may protrude upward from the upper end portion of the first inner hub 1212.

The second bearing accommodating portion 1214 may accommodate the second bearing 135.

The second bearing accommodating portion 1214 may be open upward. The second bearing 135 may be accommodated through the upper portion of the second bearing accommodating portion 1214.

The second bearing 135 may be implemented as a ball bearing. A second holder 1351 may be coupled to an outer circumferential surface of the second bearing 135 so as to surround the second bearing 135. The second holder 1351 may be formed in a circular ring shape.

A second O-ring 1352 may be mounted on an outer circumferential surface of the second holder 1351. The second O-ring 1352 may be provided by one or in plurality.

The second O-rings 1352 may be disposed in a spaced manner along a lengthwise direction of the second holder 1351.

Since the second O-ring 1352 and the second holder 1351 have the same or similar configuration to the aforementioned first O-ring 1342 and first holder 1341, a redundant description will be omitted.

A wave washer 1215 may be accommodated inside the second bearing accommodating portion 1214. The wave washer 1215 may be formed in a wavy ring shape. The wave washer 1215 may be disposed between a bottom surface in the second bearing accommodating portion 1214 and the second bearing 135.

The wave washer 1215 may lower surface pressure by evenly distributing pressure of the second bearing 135.

The second bearing 135 may be coupled to be in close contact with the inner surface of the second bearing accommodating portion 1214 by the second O-ring 1352. The wave washer 1215 can prevent the second bearing 135 from loosening in the second bearing accommodating portion 1214, like a spring washer.

A plurality of first vanes 1213 may be provided in an annular space between an inner circumferential surface of the outer cover 1211 and an outer circumferential surface of the first inner hub 1212.

The first vanes 1213 may protrude from the outer circumferential surface of the first inner hub 1212 to the inner circumferential surface of the outer cover 1211.

The first vanes 1213 may extend from the outer circumferential surface of the first inner hub 1212 to be inclined downward from the top to bottom of the first inner hub 1212. The first vanes 1213 may be implemented as an axial flow type.

The plurality of first vanes 1213 may connect the outer cover 1211 and the first inner hub 1212. Inner ends of the first vanes 1213 may be connected to the outer circumferential surface of the first inner hub 1212, and outer ends of the first vanes 1213 may be connected to the inner circumferential surface of the outer cover 1211.

The plurality of first vanes may be spaced apart from one another in the circumferential direction of the first inner hub 1212.

The plurality of first vanes 1213 may be fixedly disposed between the outer cover 1211 and the first inner hub 1212.

A second inner hub 1220 may be disposed at a lower portion of the first inner hub 1212. The first inner hub 1212 and the second inner hub 1220 may be disposed in series in the axial direction.

The second inner hub 1220 may be formed in a hollow cylindrical shape.

The second inner hub 1220 may have the same diameter as that of the first inner hub 1212.

The second inner hub 1220 may be mounted to the lower portion of the first inner hub 1212.

A center of the second inner hub 1220 may be disposed to coincide with the center of the outer cover 1211.

A plurality of second vanes 1222 may be disposed in an annular space between the inner circumferential surface of the outer cover 1211 and an outer circumferential surface of the second inner hub 1220. The second vanes 1222 and the second inner hub 1220 may be accommodated inside the outer cover 1211.

The second vanes 1222 may extend from the outer circumferential surface of the second inner hub 1220 to be inclined downward. The second vanes 1222 may be implemented as an axial flow type.

The plurality of second vanes 1222 may connect the outer cover 1211 and the second inner hub 1220. Inner ends of the second vanes 1222 may be connected to the outer circumferential surface of the second inner hub 1220 and outer ends of the second vanes 1222 may be connected to the inner circumferential surface of the outer cover 1211.

The plurality of second vanes may be spaced apart from one another in the circumferential direction of the second inner hub 1220.

The plurality of second vanes 1222 may be fixedly disposed between the outer cover 1211 and the second inner hub 1220.

A discharge portion 123 may be formed between the outer cover 1211 and the second inner hub 1220. The discharge portion 123 may be connected to communicate with the outside of the housing 100.

The discharge portion 123 may discharge air, which moves from the second accommodating part 102 to the inside of the second housing cover 1210, to the outside of the housing 100.

With the configuration, air sucked by the impeller 136 may flow from the second accommodating part 102 into the inner flow path of the second housing cover 1210, namely, into the annular space between the inner circumferential surface of the outer cover 1211 and the outer circumferential surfaces of the first and second inner hubs 1220.

The first and second vanes 1213 and 1222 may be arranged in series in two stages inside the second housing cover 1210, to guide the air sucked by the impeller 136 to move to the outside of the housing 100.

The first and second vanes 1213 and 1222 can minimize air flow resistance.

An inserting portion 1221 may be further provided on the upper portion of the second inner hub 1220. The inserting portion 1221 may enable coupling between the first inner hub 1212 and the second inner hub 1220. The inserting portion 1221 may protrude upward from the upper portion of the second inner hub 1220 to have a diameter smaller than the diameter of the second inner hub 1220.

The inserting portion 1221 may be formed in a hollow cylindrical shape. The inserting portion 1221 may be inserted into the first inner hub 1212 in an overlapping manner, such that the first inner hub 1212 and the second inner hub 1220 can be coupled to each other.

An upper portion of the inserting portion 1221 may extend inward in the radial direction. The upper portion of the inserting portion 1221 and the upper portion of the first inner hub 1212 may be disposed to overlap each other in the vertical direction. The upper portion of the inserting portion 1221 and the inner upper portion of the first inner hub 1212 may be coupled to each other by a coupling member such as a screw.

If the housing 100 does not have a uniform diameter in the axial direction and is recessed inward in the radial direction from the lower end of the first accommodating part 101 to the lower end of the second accommodating part 102 along the inclined part 105 and the neck part 104, support rigidity of the housing 100 in the axial direction may be reduced.

To compensate for this, a plurality of reinforcing ribs 124 may be provided on an outer side of the housing 100.

The reinforcing ribs 124 may be disposed on an outer lower portion of the housing 100.

The reinforcing ribs 124 may protrude outward in the radial direction from the neck part 104 to an outer end of the first accommodating part 101 and an outer end of the second accommodating part 102.

The reinforcing ribs 124 may have a height extending from the lower end of the first accommodating part 101 to the lower end of the second accommodating part 102.

The reinforcing rib 124 may be provided in plurality spaced apart from one another in the circumferential direction of the housing 100. This implementation exemplarily illustrates three reinforcing ribs 124 that are spaced apart from one another at equal intervals of 120 degrees.

The reinforcing ribs 124 may be longitudinally disposed across the inclined part 105, the neck part 104, and the second accommodating part 102 in the vertical direction.

The lower end of the first accommodating part 101, the inclined part 105, the neck part 104, the second accommodation part 102, and the first flange 103 may be connected all together in the vertical direction by the plurality of reinforcing ribs 124.

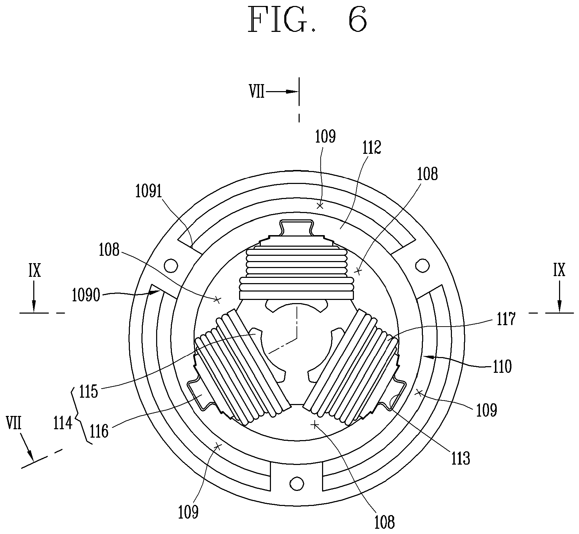

Supporting portions 1090 (refer to FIG. 6) disposed inside the first accommodating part 101 and the reinforcing ribs 124 provided outside the second accommodating part 102 may be disposed to overlap each other in the vertical direction.

Accordingly, the axial support rigidity of the housing 100 can be reinforced.

### (2) Rotor assembly 130

The rotor assembly 130 may include a rotating shaft 131, a permanent magnet 132, and a plurality of end plates 133.

A center of the rotating shaft 131 may be disposed to coincide with a center of the housing 100.

The rotating shaft 131 may extend to pass through the center of the housing 100 in the axial direction.

The rotating shaft 131 may include first and second bearing support portions 1311 and 1312, a permanent magnet mounting portion 1313, a shaft extending portion 1314, and an impeller mounting portion 1315.

The first and second bearing support portions 1311 and 1312 may be located on both end portions of the rotating shaft 131. The first bearing support portion 1311 may be disposed on an upper end portion of the rotating shaft 131, that is, on an upstream side of the permanent magnet mounting portion 1313 based on a moving direction of air.

The second bearing support portion 1312 may be disposed on a lower end portion of the rotating shaft 131, that is, on a downstream side of the impeller mounting portion 1315 based on the moving direction of the air.

The both end portions of the rotating shaft 131 may be rotatably supported by the plurality of bearings 134 and 135. The plurality of bearings 134 and 135 may include the first bearing 134 and the second bearing 135.

The first bearing support portion 1311 may be coupled through a central hole of the first bearing 134 so as to be supported by the first bearing 134. The second bearing support portion 1312 may be coupled through a central hole of the second bearing 135 so as to be supported by the second bearing 135.

The permanent magnet mounting portion 1313 may extend downward from the first bearing support portion 1311 to have a diameter that is slightly larger than a diameter of the first bearing support portion 1311. Based on the moving direction of the air, the permanent magnet mounting portion 1313 may be located at a downstream side of the first bearing support portion 1311.

The permanent magnet mounting portion 1313 may be longer in length than the first bearing support portion 1311.

A shaft accommodating hole may be formed through a center of the permanent magnet 132 in the axial direction.

The permanent magnet mounting portion 1313 may pass through the shaft accommodating hole.

The permanent magnet mounting portion 1313 may be longer in length than the permanent magnet 132. The permanent magnet 132 may be mounted to the permanent magnet mounting portion 1313 to be slidable in the axial direction along the permanent magnet mounting portion 1313.

In order to restrict the permanent magnet 132 from moving in the axial direction along the permanent magnet mounting portion 1313, the plurality of end plates 133 may be disposed on upper and lower portions of the permanent magnet 132, respectively. The plurality of end plates 133 may be disposed on upstream and downstream sides of the permanent magnet 132, respectively, based on the moving direction of the air, thereby restricting the movement of the permanent magnet 132 in the axial direction.

The shaft extending portion 1314 may be disposed on a downstream side of the permanent magnet mounting portion 1313 based on the moving direction of the air. The shaft extending portion 1314 may have a diameter that is slightly larger than a diameter of the permanent magnet mounting portion 1313.

When the diameter of the shaft extending portion 1314 is larger than the diameter of the permanent magnet mounting portion 1313, it can restrict the permanent magnet 132 from moving downward in the axial direction. Therefore, one of the plurality of end plates 133 may be excluded.

The impeller mounting portion 1315 may extend downward from the shaft extending portion 1314 to have a diameter that is smaller than the diameter of the shaft extending portion 1314.

Since the impeller mounting portion 1315 is coupled through the shaft coupling portion of the impeller 136, the impeller 136 can be mounted to the impeller mounting portion 1315.

A recess 1363 may be recessed in a lower portion of the hub 1361 of the impeller 136. The second bearing accommodating portion 1214 may be accommodated inside the recess 1363.

The recess 1363 of the impeller 136 may cover the second bearing accommodating portion 1214 and the second bearing 135.

With the configuration, the second bearing 135 can be stuck in the recess 1363. Accordingly, the second bearing 135 can be prevented from being separated to the outside of the second bearing accommodating portion 1214.

In addition, since the recess 1363 of the impeller 136 covers the second bearing accommodating portion 1214 and the second bearing 135, foreign substances such as dust contained in air can be prevented from being introduced into a gap between the second bearing accommodating portion 1214 and the second bearing 135.

### (3) Stator assembly 110

The electric motor of the present disclosure may be implemented as a three-phase motor.

A three-phase motor produces power by forming a rotating magnetic field around a rotor using three AC power sources having different phases.

Here, the stator assembly 110 may be accommodated in the first accommodating part 101.

The stator assembly 110 may include a stator core 111 and a plurality of stator coils 117.

The plurality of stator coils 117 are wound around the stator core 111.

In the implementation, three stator coils 117 may be wound around the stator core 111.

AC power sources of three phases (e.g., U-phase, V-phase, and W-phase) may be connected to the three stator coils 117, respectively, to apply AC power to the stator coils 117. When AC power is applied to the stator coils 117, a rotating magnetic field is generated around the rotor, so that the rotor can rotate.

The stator core 111 may include a back yoke 112 and a plurality of teeth 114.

The back yoke 112 may be formed in a hollow cylindrical shape.

The plurality of teeth 114 may be disposed inside the back yoke 112.

The plurality of stator coils 117 may be wound on the plurality of teeth 114, respectively. The number of teeth 114 may correspond to the number of stator coils 117.

The plurality of teeth 114 may be spaced apart from one another at equal intervals in a circumferential direction of the back yoke 112.

A plurality of inner flow paths 108 may be defined inside the back yoke 112.

The plurality of inner flow paths 108 may be defined between the adjacent teeth 114. The plurality of inner flow paths 108 and the plurality of teeth 114 may be alternately disposed in the circumferential direction of the back yoke 112.

Each of the plurality of inner flow paths 108 may be formed through the stator core 111 in the axial direction. Air introduced into the first accommodating part 101 flows through the inside of the stator assembly 110 along the plurality of inner flow paths 108.

The stator core 111 employed in the electric motor according to the present disclosure may have a small diameter to miniaturize the motor.

When the stator core 111 has a small diameter, a diameter of the back yoke 112 may also be reduced. When the diameter of the back yoke 112 is reduced, a space between the back yoke 112 and the teeth 114 may be narrowed, which may make it difficult to wind the stator coils 117 around the plurality of teeth 114.

To solve this problem, the plurality of teeth 114 may be formed to be separated from the back yoke 112. The plurality of teeth 114 may be detachably coupled to an inner circumferential surface of the back yoke 112.

A plurality of tooth coupling grooves 113 may be concavely formed in the inner circumferential surface of the back yoke 112 in the radial direction. The tooth coupling grooves 113 may extend in the axial direction of the back yoke 112.

A coupling protrusion 116 may protrude from an outer end portion of each tooth 114.

The coupling protrusion 116 of the tooth 114 may be coupled to the tooth coupling groove 113 of the back yoke 112 to be slidable in the axial direction.

After the stator coils 117 are wound around the teeth 114, the plurality of teeth 114 may be slidably coupled to the tooth coupling grooves 113 of the back yoke 112.

An insulator 118 may be disposed between the stator core 111 and the stator coils 117.

The insulator 118 electrically insulates between the adjacent stator coils 117.

The insulator 118 may include a plurality of back yoke insulators 1181 and a plurality of tooth insulators 1184.

The back yoke insulator 1181 may surround an inner surface and both end portions of the back yoke 112.

The back yoke insulator 1181 may be separated into an upper back yoke insulator 1182 and a lower back yoke insulator 1183.

The back yoke insulator 1182 may surround an upper end portion and the inner surface of the back yoke 112.

The lower back yoke insulator 1183 may surround a lower end portion of the back yoke 112.

Each of the plurality of tooth insulators 1184 may include an upper tooth insulator 1185 and a lower tooth insulator 1186. The upper tooth insulator 1185 may surround an upper surface and parts or portions of both side surfaces of the tooth 114. The lower tooth insulator 1186 may surround a lower surface and portions of both side surfaces of the tooth 114.

A lower end portion of the upper tooth insulator 1185 and an upper end portion of the lower tooth insulator 1186 may be coupled to each other in the middle of the both side surfaces of the tooth 114 to overlap each other.

A plurality of power terminals 1190 may be connected to one end portion of each of the plurality of stator coils 117 to supply three-phase AC power.

Neutral terminals 1191 may be connected to another end portions of the plurality of stator coils 117, respectively. The neutral terminals 1191 may be disposed to connect the another end portions of the respective three-phase stator coils 117.

Terminal mounting portions may be formed at an outer end portion of the upper tooth insulator 1185. The terminal mounting portions may include power terminal mounting portions 1194 and neutral terminal mounting portions 1195.

The power terminal mounting portion 1194 and the neutral terminal mounting portion 1195 may each have an accommodation space therein, and thus the power terminal 1190 and the neutral terminal 1191 may be mounted to the power terminal mounting portion 1194 and the neutral terminal mounting portion 1195, respectively.

The power terminal mounting portion 1194 and the neutral terminal mounting portion 1195 may be isolated from each other by a partition wall. The power terminal 1190 may be mounted on the power terminal mounting portion 1194 and connected to one end portion of the stator coil 117. The neutral terminal 1191 may be mounted on the neutral terminal mounting portion 1195 and connected to another end portion of the stator coil 117.

The plurality of neutral terminals 1191 may be connected by a connection ring 1192. The connection ring 1192 may be formed in a circular ring shape.

A plurality of connection bars 1193 may be provided on the connection ring 1192. The plurality of connection bars 1193 may extend radially outward from an outer circumferential surface of the connection ring 1192. Each of the connection bars 1193 may have a structure bent in the axial direction to be connected to the neutral terminal 1191. The plurality of neutral terminals 1191 may be connected by the connection bars 1193 and the connection ring 1192.

The rotor assembly 110 may be disposed inside the stator assembly 110 with an air gap therebetween. The rotor assembly 130 may rotate relative to the stator assembly 110.

A rotor accommodating hole may be defined at a central portion in the stator core 111. A pole shoe 115 may protrude from an inner end portion of each tooth 114 in the circumferential direction. The rotor accommodating hole may be formed through the stator assembly 110 in the axial direction at an inner side of the plurality of pole shoes 115.

The permanent magnet 132 may be accommodated in the rotor accommodating hole.

The stator assembly 110 and the rotor assembly 130 are disposed between the first bearing 134 and the second bearing 135.

Since the stator assembly 110 and the rotor assembly 130 electromagnetically interact with each other, the rotor assembly 130 may be rotated with respect to the stator assembly 110.

The three stator coils 117 may generate a rotating magnetic field around the permanent magnet 132 by receiving three-phase AC power.

The permanent magnet 132 may be rotated by the rotating magnetic field. The permanent magnet 132 and the rotating shaft 131 may rotate integrally.

The impeller 136 may be disposed between the first bearing 134 and the second bearing 135.

When the rotor assembly 130 and the impeller 136 are disposed between the first bearing 134 and the second bearing 135, the first bearing 134 and the second bearing 135 may support both ends of the rotating shaft 131, thereby enhancing structural stability during the rotation of the rotor assembly 130 and the impeller 136.

The stator assembly 110 and the rotor assembly 130 may be disposed at an upstream side of the impeller 136 based on a moving direction of air.

When the stator assembly 110 and the rotor assembly 130 are disposed at the upstream side of the impeller 136, external cold air of the housing 100 is sucked into the impeller 136 through the inner flow path 108 of the stator assembly 110, which improves cooling performance of the motor more efficiently.

The inner flow path 108 of the stator assembly 110 may include an inner space of the back yoke 112.

The inner flow path 108 may include spaces defined between neighboring windings of the plurality of stator coils 117 respectively wound on the plurality of teeth 114.

The inner flow path 108 may include air gaps between the teeth 114 and the permanent magnet 132.

However, since the plurality of stator coils 117, the plurality of teeth 114, the permanent magnet 132, and the rotating shaft 131 are accommodated in the inner space of the back yoke 112, a space in which air flows through the inner flow path 108 in the axial direction is very narrow. This may cause high flow resistance and flow loss.

In order to solve this problem, the present disclosure provides a bypass flow path 109.

### (4) Bypass flow path 109

The bypass flow path 109 may be provided outside or inside the housing 100.

In the implementation, the bypass flow path 109 is defined inside the housing 100 and is defined at an outer side of the stator assembly 110.

The bypass flow path 109 may be located between the housing 100 and the stator core 111.

The bypass flow path 109 may be defined between the inner circumferential surface of the housing 100 and the outer circumferential surface of the back yoke 112.

The bypass flow path 109 may be recessed in a thickness direction inside the housing 100.

The bypass flow path 109 may be disposed in the first accommodating part 101.

The bypass flow path 109 may be provided in plurality inside the first accommodating part 101. The number of bypass flow paths 109 may correspond to the number of windings of the stator coils 117.

The implementation exemplarily illustrates three bypass flow paths 109.

The plurality of bypass flow paths 109 may extend in the circumferential direction in a shape that a radial width is narrow and a length in the circumferential direction is relatively longer than the width.

The plurality of bypass flow paths 109 may be formed in a circular ring shape.

Each of the plurality of bypass flow paths 109 may be formed in an arcuate shape.

The plurality of bypass flow paths 109 may be disposed in the first accommodating part 101 to be spaced apart from one another in the circumferential direction.

A plurality of supporting portions 1090 may be provided inside the housing 100. The plurality of supporting portions 1090 may come in contact with an outer circumferential surface of the stator core 111 to support the stator core 111.

The plurality of supporting portions 1090 may protrude radially inward from the inner circumferential surface of the first accommodating part 101.

The plurality of supporting portions 1090 may be spaced apart from one another in the circumferential direction of the housing 100. Central portions of the plurality of supporting portions 1090 may be disposed to be spaced apart from one another at equal intervals in the circumferential direction.

In the implementation, three supporting portions 1090 may be provided, and the plurality of supporting portions 1090 may be disposed to be spaced apart at equal intervals of 120 degrees along the circumferential direction.

The plurality of bypass flow paths 109 and the plurality of supporting portions 1090 may be alternately disposed in the circumferential direction of the housing 100.

The bypass flow path 109 may have a circumferential length that is set in a ratio within a range of 1/4 (90 degrees/360 degrees) to 1/3 (120 degrees/360 degrees) with respect to a circumferential length of the first accommodating part 101 (circumference of one round of 360 degrees).

The circumferential length of the bypass flow path 109 may be longer than a circumferential length of the supporting portion 1090.

The circumferential length of the supporting portion 1090 may be set in a ratio within a range of 1/5 to 1/6 with respect to the circumferential length of the bypass flow path 109.

The supporting portion 1090 may have an axial height that extends from an upper end of the intake part 106 to a lower end of the first accommodating part 101.

Each of the plurality of supporting portions 1090 may include first to third supporting portions 1091 to 1093.

The first supporting portion 1091 may protrude radially inward from an inner circumferential surface of the intake part 106. The plurality of first supporting portions 1091 may be disposed between the side holes adjacent to each other, respectively.

The first housing cover 120 may be coupled to an upper portion of the intake part 106. The first supporting portion 1091 may be provided with a coupling groove formed in the vertical direction. The outer ring portion 1201 of the first housing cover 120 and the first supporting portion 1091 of the intake part 106 may be coupled to each other by coupling members such as screws. The first supporting portion 1091 may fix the first housing cover 120 to the upper portion of the intake part 106.

According to the configuration, since a radially protruding length of the first supporting portion 1091 is thicker than a thickness of the intake part 106, thickness rigidity of the intake part 106, which is weakened due to the side hole 107, can be reinforced.

The plurality of side holes 107 may be formed through the intake part 106 inwardly in the radial direction. Through the plurality of side holes 107, air can move from the outside to inside of the housing 100 in the radial direction.

In addition, the first supporting portion 1091 may be disposed between the adjacent side holes 107 in the circumferential direction and protrude inward in the radial direction, so as to guide air, which is introduced from the outside of the housing 100 through the side holes 107, to move in the radial direction.

A part of the winding of the stator coil 117 may be disposed to protrude to the upper portion of the first accommodating part 101.

The air introduced in the radial direction through the side holes 107 may be brought into contact with the stator coils 117 so as to cool heat generated in the stator coils 117 through heat exchange.

The second supporting portion 1092 may be provided on a lower portion of the first supporting portion 1091.

The second supporting portion 1092 may extend downward from the upper end of the first accommodating part 101. The second supporting portion 1092 may protrude radially inward from the inner circumferential surface of the first accommodating part 101.

The plurality of second supporting portions 1092 may support the outer circumferential surface of the back yoke 112 of the stator core 111.

The plurality of second supporting portions 1092 may define one side surface of the bypass flow path 109.

The plurality of bypass flow paths 109 may be defined by the inner circumferential surface of the first accommodating part 101, one side surface of each of the plurality of second supporting portions 1092, and the outer circumferential surface of the back yoke 112.

The plurality of bypass flow paths 109 may communicate with the plurality of side holes 107.

The plurality of bypass flow paths 109 and the plurality of axial through-holes 1205 of the first housing cover 120 may be disposed to overlap each other in the vertical direction.

With the configuration, the plurality of bypass flow paths 109 can communicate with the axial through-holes 1205 of the first housing cover 120 in the vertical direction.

The first supporting portion 1091 and the second supporting portion 1092 may be disposed on the same perpendicular line in the vertical direction and may be integrally formed with each other.

Inner surfaces of the first supporting portion 1091 and the second supporting portion 1092 may be formed in a curved shape.

The inner surfaces of the first supporting portion 1091 and the second supporting portion 1092 may be disposed on the same perpendicular curved surface.

The inner surface of the second supporting portion 1092 may be in surface-contact with the outer circumferential surface of the back yoke 112, and the second supporting portion 1092 may support the stator core 111.

The outer circumferential surface of the stator core 111 may be press-fitted to the inner surface of the second supporting portion 1092.

With the configuration, the first supporting portion 1091 can guide the stator core 111 to be press-fitted to the inner surface of the second supporting portion 1092 when assembling the stator assembly 110.

The third supporting portion 1093 may be provided on a lower portion of the second supporting portion 1092.

The third supporting portion 1093 may protrude radially inward from the inner circumferential surface of the first accommodating part 101.

The third supporting portion 1093 may protrude more radially inward from the lower end of the second accommodating part 1092.

The third supporting portion 1093 may have a height extending from the lower end of the second supporting portion 101 to the lower end of the first accommodating part 1092. The lower end of the second supporting portion 1092 may be located higher than an inner lower end of the first accommodating part 101 by the height of the third supporting portion 1093.

An upper end of the third supporting portion 1093 may be formed horizontally. The upper end of the third supporting portion 1093 is formed in a planar shape that is horizontally flat in the circumferential direction.

With the configuration, the lower end portion of the back yoke 112 of the stator core 111 may be seated on the flat upper surface of the third supporting portion 1093. The third supporting portion 1093 may limit a vertical movement of the stator assembly 110. The third supporting portion 1093 may horizontally support the stator assembly 110.

The bypass flow path 109 may be defined between the outer circumferential surface of the back yoke 112 and the inner circumferential surface of the first accommodating part 101. With the configuration, the bypass flow path 109 can expand a cross-sectional area of a flow path of air passing through the inside of the housing 100.

The bypass flow path 109 may be isolated from the inner flow path 108 of the back yoke 112.

The bypass flow path 109 may isolate a part of air introduced into the first accommodating part 101 from a part of air passing through the inner flow path 108 of the back yoke 112. The inner flow path 108 of the back yoke 112 may accommodate the plurality of teeth 114 and the windings of the plurality of stator coils 117. Accordingly, significantly great flow resistance may be caused in the inner flow path 108 compared to the bypass flow path 109.

A part of air introduced into the first accommodating part 101 may bypass the stator assembly 110 through the bypass flow path 109.

Another part of the air introduced into the first accommodating part 101 may pass through the inner flow path 108 of the back yoke 112.

A flow rate of air passing through the bypass flow path 109 may be much greater than a flow rate of air passing through the inner flow path 108 of the back yoke 112.

Assuming that the flow rate of the air introduced into the first accommodating part 101 is 100%, the air flow rate in the bypass flow path 109 and the air flow rate in the inner flow path 108 may be 80% to 20%.

An area of the bypass flow path 109 may be smaller than an area of the inner flow path 108 of the back yoke 112, but the flow rate of the bypass flow path 109 may be much greater than the flow rate of the inner flow path 108 of the back yoke 112.

Accordingly, the bypass flow path 109 minimizes flow resistance occurred in a structure in which the back yoke 112 surrounds the stator coil 117, and the first accommodating part 101 of the housing 100 surrounds the back yoke 112.

In addition, air flowing along the bypass flow path 109 may be brought into contact with the outer circumferential surface of the back yoke 112 of the stator core 111, subjected to heat exchange, thereby improving cooling performance of the stator core 111.

The plurality of teeth 114 and the windings of the plurality of stator coils 117 may be located at the inner side of the back yoke 112, such that a center of a circumferential width (thickness) of the tooth 114 coincides with a center of a circumferential length of the bypass flow path 109 in the radial direction.

A radial center line passing through a center of the winding of the stator coil 117 wound on the tooth 114 in the radial direction may coincide with the center of the circumferential length of the bypass flow path 109.

With the configuration, when air is moving along the bypass flow path 109, the smallest flow resistance may occur at a central portion of the bypass flow path 109 in the circumferential direction. Therefore, a flow velocity at the central portion of the bypass flow path 109 in the circumferential direction may be much faster than a flow velocity at both ends of the bypass flow path 109 in the circumferential direction.

Since the stator coil 117 generates the most heat when driving the electric motor, the stator coil 117 can be more efficiently cooled by arranging the central portions of the stator coil 117 and the tooth 114 at the central portion of the bypass flow path 109 in the circumferential direction where air flows at the fastest flow velocity.

Even if the bypass flow path 109 is small in size, the cooling performance of the electric motor may be greatly improved.

The air passing through the bypass flow path 109 can merge with the air passing through the inner flow path 108 of the back yoke 112 at the inclined part 105 between the first accommodating part 101 and the neck part 104.

### 3. Description of Supporting Portion 2090 of Housing 200 according to Another Implementation

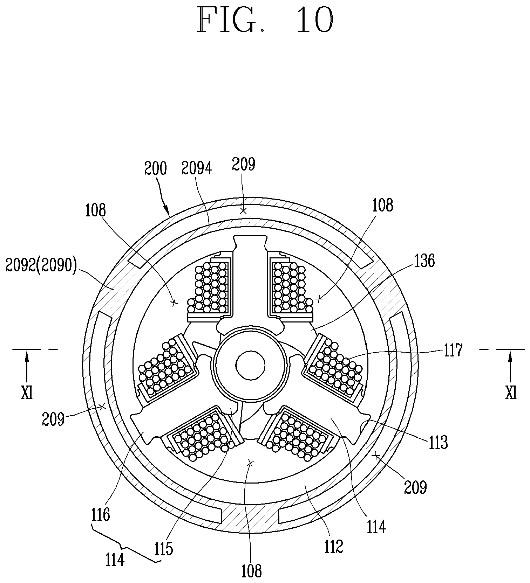

FIG. 10 is a cross-sectional view illustrating a structure of a supporting portion 2090 of a housing 200 in accordance with another implementation of the present disclosure.

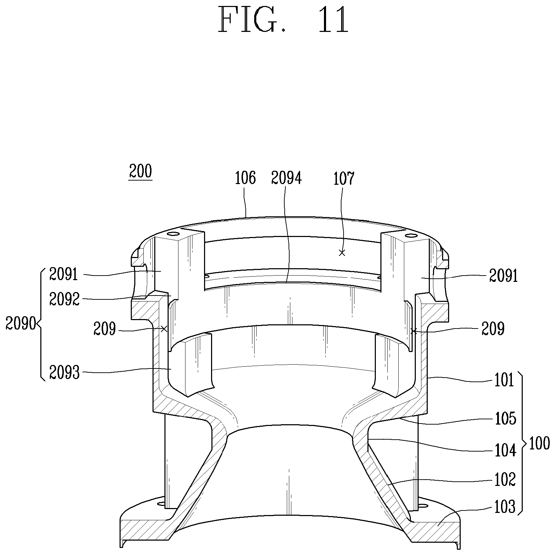

FIG. 11 is a cross-sectional view taken along the line XI-XI of FIG. 10, which illustrates an internal structure of the housing 200 with the stator assembly 110 removed.

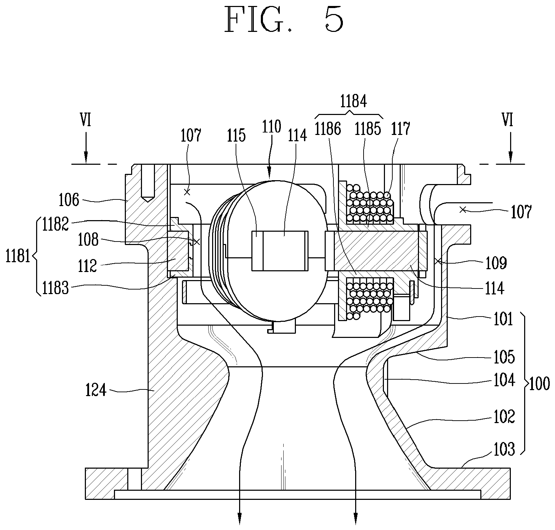

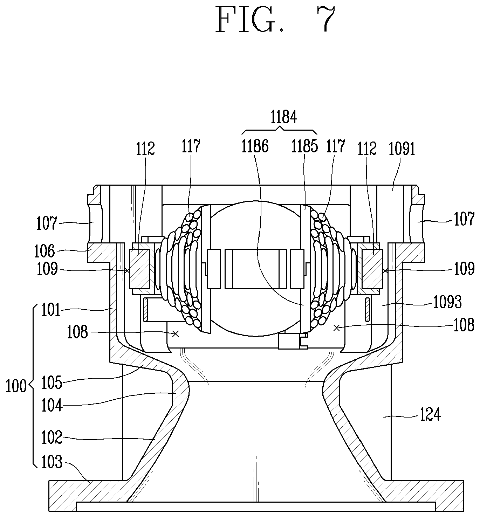

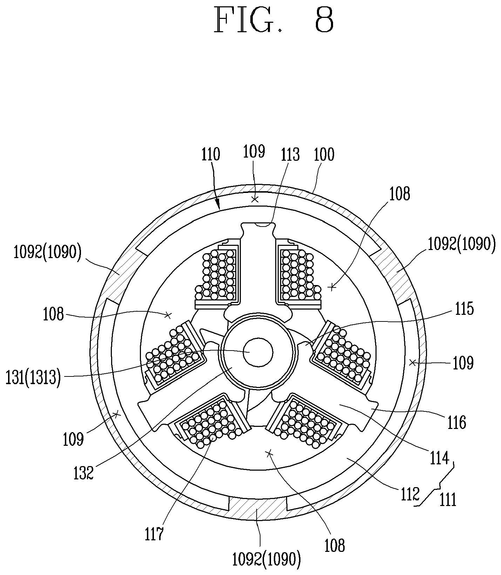

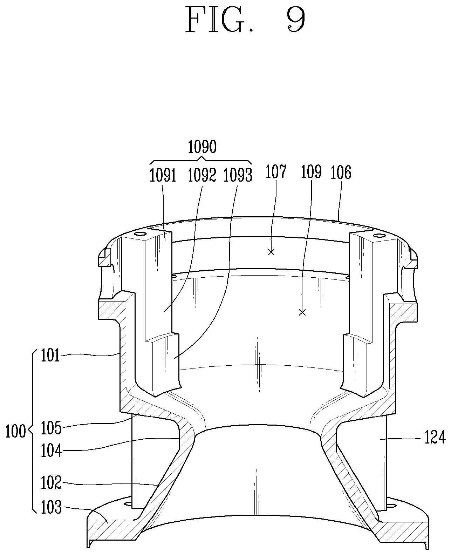

The another implementation is different from the foregoing implementation described with reference to FIGS. 1 to 9 in that the supporting portion 2090 further includes a supporting rib 2094.

The supporting rib 2094 may support the stator core 111 by surrounding the stator core 111.

The supporting rib 2094 may be disposed at an outer side of the stator core 111. The supporting rib 2094 may surround an outer circumferential surface of the stator core 111. The supporting rib 2094 may be formed in a circular ring shape to come in contact with the outer circumferential surface of the back yoke 112. The supporting rib 2094 may surround the entire outer circumferential surface of the back yoke 112. The supporting rib 2094 may extend along the circumferential direction of the back yoke 112.

The supporting rib 2094 may have a thickness that is thinner than a thickness of the first accommodating part 101.

The supporting rib 2094 may have a height that is lower than a height of a second supporting portion 2092. The height of the supporting rib 2094 may be the same as the height of the back yoke 112.

An upper end of the supporting rib 2094 may be disposed to be lower than the upper end of the first accommodating part 101.

With the configuration, as the upper end of the supporting rib 2094 is located lower than the side holes 107, resistance of air that is caused when the air flowing into the first accommodating part 101 through the side holes 107 passes through the upper end of the supporting rib 2094 can be reduced.

The supporting rib 2094 may be spaced apart radially inward from the inner circumferential surface of the first accommodating part 101.

A plurality of second supporting portions 2092 and a plurality of supporting ribs 2094 may extend along the circumferential direction of the back yoke 112 to form a single closed loop.

The supporting ribs 2094 may be interposed between the second supporting portions 2092 adjacent to each other, respectively, to connect the plurality of second supporting portions 2092.

The supporting rib 2094 may be formed in a curved shape with the same curvature as that of the stator core 111.

The supporting rib 2094 can surround the entire outer circumferential surface of the stator core 111 to further increase rigidity for supporting the stator assembly 110.

A bypass flow path 209 may be defined between the inner circumferential surface of the first accommodating part 101 and the supporting rib 2094.

Since other components are the same as or similar to those in the foregoing implementation of FIGS. 1 to 9, duplicated descriptions will be omitted.

### 4. Description of Bypass Flow Path 3090, 3091 of Housing 100 according to Various Implementations

### (1) Arcuate shape of bypass flow path 3090

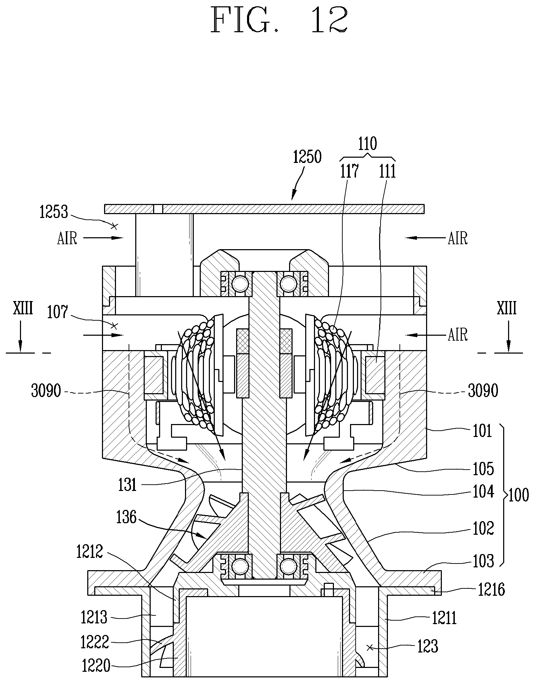

FIG. 12 is a conceptual view illustrating an electric motor in accordance with another implementation of the present disclosure.

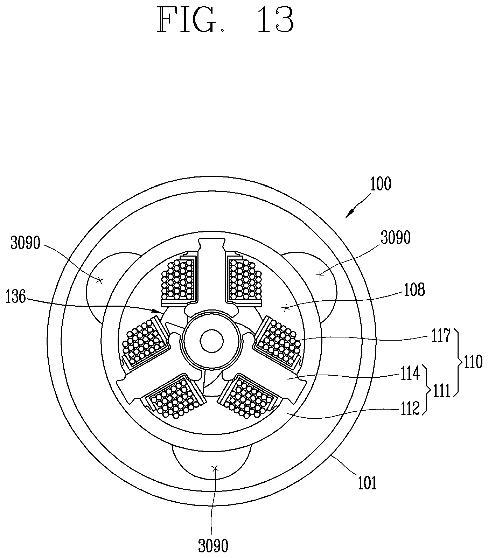

FIG. 13 is a conceptual view illustrating a structure in which a bypass flow path 3090 is formed in an arcuate shape, in accordance with still another implementation of the present disclosure.

This implementation is different from the implementations illustrated in FIGS. 1 to 11 in that the bypass flow path 3090 is formed in an arcuate shape.

The bypass flow path 3090 may be provided in plurality inside the first accommodating part 101.

The bypass flow path 3090 may be recessed radially outward into the inner circumferential surface of the first accommodating part 101.

The bypass flow path 3090 may be defined to penetrate through the first accommodating part 101 in the axial direction.

The bypass flow path 3090 may be formed in a semicircular or arcuate shape.

The bypass flow path 3090 may have a curvature that is smaller than a curvature of the first accommodating part 101.

The plurality of bypass flow paths 3090 may be disposed to be spaced apart from one another in the first accommodating part 101 in the circumferential direction. This implementation illustrates three bypass flow paths 3090, but the present disclosure may not be limited to this.

Centers of the bypass flow paths 3090 may be spaced apart from one another at equal intervals of 120 degrees in the circumferential direction.

An arcuate length of the bypass flow path 3090 may be greater than 1/12 of a circumferential length of the back yoke 112 and smaller than 1/8 of a circumferential length of the outer circumferential surface of the first accommodating part 101.

A plurality of first radial center lines passing through arcuate centers of the bypass flow paths 3090 and a center of the stator core 111 in the radial direction and a plurality of second radial center lines passing through circumferential centers of the teeth 114 and the center of the stator core 111 in the radial direction may be alternately disposed with a phase difference of 60 degrees.

In FIG. 12, an arrow indicated by a solid line shows the flow of air passing through the inner flow path 108 of the stator core 111, and an arrow indicated by a dotted line indicates the flow of air passing through the bypass flow path 3090.

The reason why the flow of air in the bypass flow path 3090 is indicated by the dotted line is that the bypass flow path 3090 is not actually visible in the cross-sectional view of FIG. 12.

The supporting portion according to the implementation may not include the first supporting portion 1091 protruding from the inner circumferential surface of the intake part.

Since other components are the same as or similar to those in the foregoing implementation of FIGS. 1 to 11, duplicated descriptions will be omitted.

### (2) Polygonal shape of bypass flow path 3091

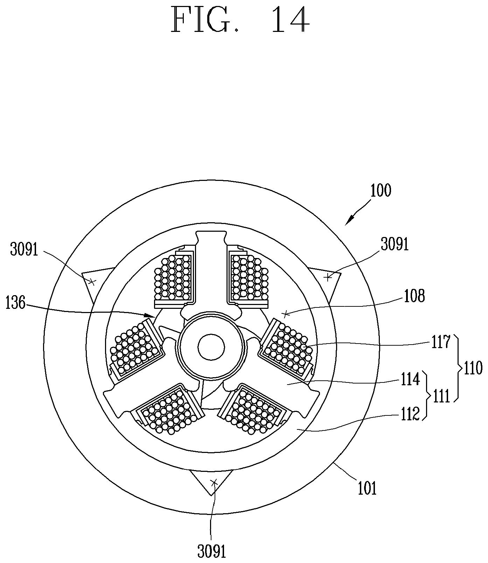

FIG. 14 is a conceptual view illustrating a structure in which a bypass flow path 3091 is formed in a triangular shape, in accordance with still another implementation of the present disclosure.

This implementation may be different from the foregoing implementations of FIGS. 1 to 13 in that the bypass flow path 3091 has a cross-section with a triangular shape.

However, the bypass flow path 3091 may have a cross-section in a polygonal shape such as a rectangular shape, in addition to the triangular shape, and also have a cross-section in various shapes such as a circular shape and the like.

The number of bypass flow paths 3091 may not be limited to three.

The bypass flow path 3091 may be provided in plurality inside the first accommodating part 101.

The bypass flow path 3091 may be recessed radially outward into the inner circumferential surface of the first accommodating part 101.

The bypass flow path 3091 may be defined to penetrate through the first accommodating part 101 in the axial direction.

The bypass flow path 3091 may be formed in a triangular shape. The bypass flow path 3091 may be formed in a polygonal shape such as a rectangular shape, in addition to the triangular shape.

The plurality of bypass flow paths 3091 may be disposed to be spaced apart from one another in the first accommodating part 101 in the circumferential direction. The implementation illustrates three bypass flow paths 3091, but the present disclosure may not be limited to this.

Centers of the bypass flow paths 3091 may be spaced apart from one another at equal intervals of 120 degrees in the circumferential direction of the back yoke 112.

An arcuate length of the bypass flow path 3091 may be greater than 1/20 of a circumferential length of the outer circumferential surface of the back yoke 112 and smaller than 1/8 of a circumferential length of the outer circumferential surface of the first accommodating part 101.

A plurality of first radial center lines passing through centers of circumferential widths of the bypass flow paths 3091 and a center of the stator core 111 in the radial direction and a plurality of second radial center lines passing through circumferential centers of the teeth 114 and the center of the stator core 111 in the radial direction may be alternately disposed with a phase difference of 60 degrees.

The supporting portion according to the implementation may not include the first supporting portion 1091 protruding from the inner circumferential surface of the intake part.

Since other components are the same as or similar to those in the foregoing implementation of FIGS. 1 to 13, duplicated descriptions will be omitted.

### 5. Description of Operation and Effects of Bypass Flow Path 109 of Electric Motor according to the Present Disclosure

Hereinafter, the operation and effects of the bypass flow path 109 will be described with reference to FIGS. 1 to 9. However, the operation and effects of the bypass flow path 109 may also be applied to the implementations of FIGS. 10 to 14.

### (1) Operation process of bypass flow path 109

Hereinafter, a movement path of air will be described.

Air may be introduced through the lateral flow paths 1253 of the inverter 1250 / the side holes 107 of the electric motor, divergently flow into the axial through-holes 1205 of the first housing cover 120 -> the intake part 106 -> the inner flow paths 108 / bypass flow paths 109 of the stator assembly 110, merge at the inclined part 105, and be discharged through the neck part 104 -> the impeller 136 -> the first vanes 1213 of the second housing cover 1210 -> the second vanes 1222.

In more detail, external air of the housing 100 may be introduced into the housing 100 through two movement paths.

A first movement path may be a path along which air flows into the inverter 1250 through the plurality of lateral flow paths 1253.

The plurality of first and second coupling portions 1202 and 1252 may be disposed between the PCB 1251 of the inverter 1250 and the first housing cover 120. The plurality of lateral flow paths 1253 may extend through between the plurality of first and second coupling portions 1202 and 1252 in the radial direction.

The external air of the housing 100 may be introduced into the PCB 1251 of the inverter 1250 through the plurality of lateral flow paths 1253, so as to cool semiconductor devices, namely, IGBT and capacitor, mounted on the PCB 1251.

A second movement path may be a path along which air is introduced into the electric motor through the plurality of side holes 107.

The plurality of side holes 107 may be disposed on the side surface of the intake part 106 to be spaced apart from one another in the circumferential direction. The plurality of side holes 107 may be formed through the intake part 106 in the radial direction. The intake part 106 may communicate with the outside of the housing 100 through the side holes 107.

The external air of the housing 100 may be introduced into the intake part 106 through the plurality of side holes 107.

The plurality of axial through-holes 1205 may be disposed in the first housing cover 120. The plurality of axial through-holes 1205 may be formed through the first housing cover 120 in the axial direction.

The inner space of the PCB 1251 of the inverter 1250 and the inner space of the intake part 106 may communicate with each other through the axial through-holes 1205.

Air in the inner space of the inverter 1250 may flow into the intake part 106 through the plurality of axial through-holes 1205 after cooling the inverter 1250.

The air inside the intake part 106 may divergently flow into two movement paths in the intake part 106.

A third movement path may be a path defined by the plurality of inner flow paths 108.

The plurality of inner flow paths 108 may be formed through the inside of the stator core 111 in the axial direction.

The inner flow paths 108 may be formed through the inside of the stator assembly 110.

A fourth movement path may be a path defined by the plurality of bypass flow paths 109.

The plurality of bypass flow paths 109 may be defined between the stator core 111 and the first accommodating part 101.

The plurality of bypass flow paths 109 may be formed through the inside of the first accommodating part 101 in the axial direction.

The bypass flow paths 109 may define a movement path bypassing the third movement path, namely, the inner flow paths 108 of the stator assembly 110.

An air-flowing direction in the first movement path and the second movement path may be the radial direction, and an air-flowing direction in the third movement path (the inner flow paths 108) and the fourth movement path (the bypass flow paths 109) may be the axial direction.

The third and fourth movement paths may be perpendicular to the first and second movement paths.

Air in the intake part 106 may be divergently introduced into the inner flow paths 108 and the bypass flow paths 109.

A part of the air in the intake part 106 may pass through the plurality of inner flow paths 108.

In addition, another part of the remaining air in the intake part 106 may pass through the plurality of bypass flow paths 109.

The air moved through the inner flow paths 108 and the air moved through the bypass flow paths 109 may merge with each other at the inclined part 105.

The air merged in the inclined part 105 may move to the upstream side of the impeller 136 as the cross-sectional area of the flow path is gradually narrowed.

The air passing through the neck part 104 may receive rotational force from the impeller 136 and move in the axial direction of the second accommodating part 102.

The first vanes 1213 and the second vanes 1222 of the second housing cover 1210 may guide the air, which has passed through the impeller 136 in an axial flow form, to flow in the axial direction.

The air passing through the impeller 136 may flow sequentially along the first vanes 1213 and the second vanes 1222 of the second housing cover 1210. The air may then flow out of the housing 100 and blow in one direction.

### (2) Effects of bypass flow path 109

In general, in a three-phase motor, the stator assembly 110 and the rotor assembly 130 are accommodated in the housing 100.

In a small motor, the stator assembly 110 may be configured such that the stator coils 117 are wound on the teeth 114, separately provided from the back yoke 112 of the stator core 111, and the windings of the stator coils 117 are then accommodated in the back yoke 112.

When the windings of the plurality of stator coils 117 are accommodated inside the back yoke 112, spaces of the inner flow paths 108 penetrating through the inside of the back yoke 112 are very narrow.

This may cause flow resistance and flow loss of air passing through the back yoke 112 in the small motor.

To solve this problem, first, the bypass flow paths 109 that bypass the stator assembly 110 may be further provided inside the housing 100 to minimize flow resistance and flow loss of air.

Here, since the plurality of bypass flow paths 109 expand a movement area of air, the flow resistance and flow loss of the air can be reduced, compared to the case where only the inner flow paths 108 of the stator assembly 110 are provided as a flow path penetrating through the housing 100.

Second, an intake path in the first accommodating part 101 may be divided into the inner flow paths 108 and the bypass flow paths 109 so as to induce a flowing direction of air from the inner flow paths 108 having great flow resistance to the bypass flow paths 109 having small flow resistance.

The bypass flow paths 109 can have much lower flow resistance and flow loss than those in the inner flow paths 108 penetrating through the stator assembly 110. Therefore, even if a cross-sectional area of the bypass flow paths 109 is smaller than that of the inner flow paths 108 of the back yoke 112, more air can flow into the bypass flow paths 109 with the low resistance.

Accordingly, heat generated in the stator assembly 110 can be discharged to the bypass flow paths 109, resulting in enhancing the cooling performance of the stator.

Although the bypass flow paths 109 have the very small cross-sectional area, the great effect of reducing the flow resistance and the flow loss can be provided. This may allow high cooling performance to be secured by the bypass flow paths 109 with the small cross-sectional area.

Third, the plurality of supporting portions 1090 that partially or entirely surround the stator core 111 may be provided inside the housing 100, so as to efficiently support the motor even with a small size.

Fourth, the plurality of bypass flow paths 109 may be spaced apart from the plurality of supporting portions 1090 at equal intervals in the circumferential direction, so as to evenly distribute the flow rate of air bypassing the stator assembly 110.

Fifth, as the plurality of bypass flow paths 109 and the plurality of supporting portions 1090 are alternately disposed between the inner surface of the housing 100 and the outer circumferential surface of the stator core 111, a simple structure can be achieved even if the bypass flow paths 109 are included in the housing 100.

Sixth, the housing 100 having the bypass flow paths 109 and the motor having the bypass flow paths 109 can be applied to various appliances such as a vacuum cleaner and an air dryer.

## Claims

1. An electric motor comprising:
a housing (100);
a stator assembly (110) accommodated in the housing (100);
a rotor assembly (130) rotatably mounted inside the stator assembly (110);
an impeller (136) receiving power from the rotor assembly (130) to generate a flow of air;
an inner flow path (108) defined in the stator assembly (110) so that a part of the air passes through the stator assembly (110);
a bypass flow path (109) defined in the housing (100) and disposed at an outer side of the stator assembly (110) so that another part of the air bypasses the stator assembly (110);
a first accommodating part (101) to accommodate the rotor assembly (130) and the stator assembly (110); and
a second accommodating part (102) disposed at a downstream side of the first accommodating part (101) based on a flowing direction of the air, the second accommodating part (102) accommodating the impeller (136);
a neck part (104) disposed between the first accommodating part (101) and the second accommodating part (102), and having a smaller diameter than a diameter of the first accommodating part (101); and
an inclined part (105) formed to be inclined from the first accommodating part (101) to the neck part (104), and
wherein the bypass flow path (109) is defined between an inner circumferential surface of the first accommodating part (101) and an outer circumferential surface of the stator assembly (110) ),
wherein the inclined part (105) is provided between a lower end of the first accommodating part (101) and the neck part (104),
wherein the inner surface of the neck part (104) is rounded into a curved shape, the neck part 104 has a curvature smaller than a curvature of a connected portion between the first accommodating part (101) and the inclined part (105),
wherein the neck part (104) is connected to an upper end portion of the second accommodating part (102), the neck part (104) is a portion having the smallest diameter among diameters of the inner flow path passing through the inner side of the housing (100),
wherein the second accommodating part (102) is formed in a conical shape, the second accommodating part (102) is formed such that its diameter gradually increases from the top to the bottom, the upper end of the second accommodating part (102) has a diameter that is smaller than that of the lower end of the second accommodating part (102), wherein upper and lower are defined with respect to the flowing direction of the air, an upper side being upstream and a lower side downstream.

2. The electric motor of claim 1, wherein the bypass flow path (109) is formed in an inner circumferential surface of the housing (100) to be recessed radially outward, the bypass flow path (109) being disposed at an outer side of the inner flow path (108).

3. The electric motor of claim 1 or 2, wherein the bypass flow path (109) is located at an upstream side of the impeller (136) based on a flowing direction of the air.

4. The electric motor of any of claims 1 to 3, further comprising a plurality of supporting portions (1090) protruding radially inward from an inner circumferential surface of the housing (100) to support an outer circumferential surface of the stator assembly (110),
wherein the bypass flow path (109) is provided in plurality between the plurality of supporting portions (1090), the plurality of bypass flow paths (109) extending in a circumferential direction of the housing (100) and being formed through the housing (100) in an axial direction of the housing (100), and
wherein the plurality of bypass flow paths (109) is spaced apart from one another at equal intervals in the circumferential direction of the housing.

5. The electric motor of claim 4, wherein the bypass flow path (109) has a circumferential length that is longer than a radial width of the bypass flow path (109) and a circumferential width of the supporting portion (1090).

6. The electric motor of claim 4 or 5, further comprising a supporting rib (2094) extending in the circumferential direction to surround the outer circumferential surface of the stator assembly (110), the supporting rib (2094) connecting the plurality of supporting portions (1090),
wherein the bypass flow path (109) is defined between the inner circumferential surface of the housing (100) and an outer circumferential surface of the supporting rib (2094).

7. The electric motor of any of claims 1 to 6, wherein the bypass flow path (109) is formed in one of a ring shape, an arcuate shape, and a polygonal shape.
8

8. The electric motor of any of claims 1 to 7, wherein the rotor assembly (130) comprises:
a rotating shaft (131) rotatably mounted to a central portion of the housing (100);
a permanent magnet (132) mounted on the rotating shaft (131);
a first bearing (134) to support one end portion of the rotating shaft (131); and
a second bearing (135) to support another end portion of the rotating shaft (131),
wherein the impeller (136) is rotatably mounted on the rotating shaft (131), and is disposed at a downstream side of the permanent magnet (132) based on the flowing direction of the air,
wherein the rotating shaft (131) comprises an impeller mounting portion (1315) to support the impeller (136),
wherein the impeller mounting portion (1315) is disposed between the first bearing (134) and the second bearing (135), and
wherein the impeller (136) is disposed to cover the second bearing (135).

9. The electric motor of any of claims 1 to 8, wherein the housing (100) comprises:
a first accommodating part (101) to accommodate the rotor assembly (130) and the stator assembly (110); and
a second accommodating part (102) disposed at a downstream side of the first accommodating part (101) based on a flowing direction of the air, the second accommodating part (102) accommodating the impeller (136);
an intake part (106) disposed at an upstream side of the first accommodating part (101) based on the flowing direction of the air, and having a plurality of side holes (107) communicating with an outside of the housing (100), the intake part (106) sucking the air from the outside of the housing (100) into the stator assembly (110), and
wherein the bypass flow path (109) communicates with the plurality of side holes (107).

10. The electric motor of any of claims 1 to 9, wherein the stator assembly (110) comprises:
a back yoke (112) formed in a circular ring shape;
a plurality of teeth (114) mounted on an inner circumferential surface of the back yoke (112); and
a plurality of stator coils wound on the plurality of teeth (114), respectively,
wherein the back yoke (112) is disposed between the bypass flow path (109) and the inner flow path (108),
wherein the plurality of inner flow paths (108) is formed through the inside of the back yoke (112) in the axial direction, and
wherein the bypass flow path (109) is defined between the inner circumferential surface of the housing (100) and an outer circumferential surface of the back yoke (112).

11. The electric motor of any of claims 1 to 10, further comprising:
a first housing cover (120) mounted to one side of the housing (100) and having a first bearing (134) therein; and
a second housing cover (1210) mounted to another side of the housing (100) and having a second bearing (135) therein,
wherein the impeller (136) is disposed between the first bearing (134) and the second bearing (135), and
wherein the first housing cover (120) comprises:
an outer ring portion (1201);
a first bearing accommodating portion (1203) disposed at an inner central portion of the outer ring portion (1201) and accommodating the first bearing (134);
a plurality of connecting portions (1204) extending radially from an inner circumferential surface of the outer ring portion (1201) toward an outer circumferential surface of the first bearing accommodating portion (1203), so as to connect the outer ring portion (1201) and the first bearing accommodating portion (1203); and
a plurality of axial through-holes (1205) formed through between the plurality of connecting portions (1204) in an axial direction, and
wherein the bypass flow path (109) and the axial through-holes (1205) are disposed to overlap each other in the axial direction, and communicate with each other.

12. The electric motor of claim 11, wherein the second housing cover (1210) comprises:
an outer cover (1211);
a first inner hub (1212) disposed inside the outer cover (1211);
a second bearing accommodating portion (1214) protruding from one side of the first inner hub (1212) toward the impeller (136), and accommodating the second bearing (135);
a plurality of first vanes (1213) spirally protruding from an outer circumferential surface of the first inner hub (1212) toward an inner circumferential surface of the outer cover (1211), so as to connect the outer cover (1211) and the first inner hub (1212);
a second inner hub (1220) accommodated inside the outer cover (1211) and disposed in series with the first inner hub (1212); and
a plurality of second vanes (1222) protruding spirally from an outer circumferential surface of the second inner hub (1220) toward the inner circumferential surface of the outer cover (1211).

13. The electric motor of claim 11 or 12, further comprising an inverter (1250) provided with an IGBT and a capacitor, to control speed of the electric motor,
wherein the inverter (1250) comprises:
a Printed Circuit Board (PCB) (1251) having the IGBT and the capacitor mounted thereon, and spaced apart from one side of the first housing cover (120) in the axial direction;
a plurality of first coupling portions (1202) protruding from the outer ring portion (1201) toward the PCB (1251);
a plurality of second coupling portions (1252) protruding from an edge portion of the PCB (1251) toward the plurality of first coupling portions (1202), respectively, to be coupled to the plurality of first coupling portions (1202); and
a plurality of lateral flow paths (1253) defined between the PCB (1251) and the first housing cover (120) so that the air is introduced, the plurality of lateral flow paths (1253) being formed through between the plurality of second coupling portions (1252) in a radial direction, and
wherein the plurality of lateral flow paths (1253) and the plurality of axial through-holes (1205) communicate with each other.

## Patentansprüche

1. Elektromotor, der aufweist:
ein Gehäuse (100);
eine Statoranordnung (110), die in dem Gehäuse (100) aufgenommen ist;
eine Rotoranordnung (130), die drehbar innerhalb der Statoranordnung (110) angebracht ist;
ein Laufrad (136), das von der Rotoranordnung (130) Energie empfängt, um einen Luftstrom zu erzeugen;
einen inneren Strömungsweg (108), der in der Statoranordnung (110) definiert ist, so dass ein Teil der Luft durch die Statoranordnung (110) strömt;
einen Umgehungsströmungsweg (109), der im Gehäuse (100) definiert und an einer Außenseite der Statoranordnung (110) angeordnet ist, so dass ein anderer Teil der Luft die Statoranordnung (110) umgeht;
einen ersten Aufnahmeteil (101), um die Rotoranordnung (130) und die Statoranordnung (110) aufzunehmen; und
einen zweiten Aufnahmeteil (102), der auf einer Stromabwärtsseite des ersten Aufnahmeteils (101) bezogen auf die Strömungsrichtung der Luft angeordnet ist, wobei der zweite Aufnahmeteil (102) das Laufrad (136) aufnimmt;
einen Halsteil (104), der zwischen dem ersten Aufnahmeteil (101) und dem zweiten Aufnahmeteil (102) angeordnet ist und einen kleineren Durchmesser als der Durchmesser des ersten Aufnahmeteils (101) aufweist; und
einen geneigten Teil (105), der so ausgebildet ist, dass er vom ersten Aufnahmeteil (101) zum Halsteil (104) geneigt ist, und
wobei der Umgehungsströmungsweg (109) zwischen einer Innenumfangsfläche des ersten Aufnahmeteils (101) und einer Außenumfangsfläche der Statoranordnung (110) definiert ist,
wobei der geneigte Teil (105) zwischen einem unteren Ende des ersten Aufnahmeteils (101) und dem Halsteil (104) vorgesehen ist,
wobei die Innenfläche des Halsteils (104) zu einer gekrümmten Form abgerundet ist,
wobei der Halsteil (104) eine Krümmung aufweist, die kleiner ist als die Krümmung eines Verbindungsabschnitts zwischen dem ersten Aufnahmeteil (101) und dem geneigten Teil (105),
wobei der Halsteil (104) mit einem oberen Endabschnitt des zweiten Aufnahmeteils (102) verbunden ist, wobei der Halsteil (104) ein Abschnitt mit dem kleinsten Durchmesser unter den Durchmessern des inneren Strömungswegs ist, der durch die Innenseite des Gehäuses (100) verläuft,
wobei der zweite Aufnahmeteil (102) in einer konischen Form ausgebildet ist, der zweite Aufnahmeteil (102) so ausgebildet ist, dass sein Durchmesser von oben nach unten allmählich zunimmt, das obere Ende des zweiten Aufnahmeteils (102) einen Durchmesser aufweist, der kleiner ist als der des unteren Endes des zweiten Aufnahmeteils (102), wobei oben und unten in Bezug auf die Strömungsrichtung der Luft definiert sind, wobei eine Oberseite stromaufwärts und eine Unterseite stromabwärts liegt.

2. Elektromotor nach Anspruch 1, wobei der Umgehungsströmungsweg (109) in einer Innenumfangsfläche des Gehäuses (100) so ausgebildet ist, dass er radial nach außen ausgespart ist, wobei der Umgehungsströmungsweg (109) an einer Außenseite des inneren Strömungswegs (108) angeordnet ist.

3. Elektromotor nach Anspruch 1 oder 2, wobei sich der Umgehungsströmungsweg (109) bezogen auf die Strömungsrichtung der Luft auf einer Stromaufwärtsseite des Laufrads (136) befindet.

4. Elektromotor nach einem der Ansprüche 1 bis 3, der ferner mehrere Stützabschnitte (1090) aufweist, die von einer Innenumfangsfläche des Gehäuses (100) radial nach innen vorstehen, um eine Außenumfangsfläche der Statoranordnung (110) zu stützen,
wobei der Umgehungsströmungsweg (109) mehrfach zwischen den mehreren Stützabschnitten (1090) vorgesehen ist, wobei sich die mehreren Umgehungsströmungswege (109) in Umfangsrichtung des Gehäuses (100) erstrecken und durch das Gehäuse (100) in einer axialen Richtung des Gehäuses (100) ausgebildet sind, und
wobei die mehreren Umgehungsströmungswege (109) in Umfangsrichtung des Gehäuses in gleichen Abständen voneinander beabstandet sind.

5. Elektromotor nach Anspruch 4, wobei der Umgehungsströmungsweg (109) eine Umfangslänge aufweist, die größer ist als eine radiale Breite des Umgehungsströmungswegs (109) und eine Umfangsbreite des Stützabschnitts (1090).

6. Elektromotor nach Anspruch 4 oder 5, der ferner eine Stützrippe (2094) aufweist, die sich in der Umfangsrichtung erstreckt, um die Außenumfangsfläche der Statoranordnung (110) zu umgeben, wobei die Stützrippe (2094) die mehreren Stützabschnitte (1090) verbindet,
wobei der Umgehungsströmungsweg (109) zwischen der Innenumfangsfläche des Gehäuses (100) und einer Außenumfangsfläche der Stützrippe (2094) definiert ist.

7. Elektromotor nach einem der Ansprüche 1 bis 6, wobei der Umgehungsströmungsweg (109) ein einem einer Ringform, einer Bogenform oder einer polygonalen Form ausgebildet ist.

8. Elektromotor nach einem der Ansprüche 1 bis 7, wobei die Rotoranordnung (130) aufweist:
eine Drehwelle (131), die drehbar an einem mittleren Abschnitt des Gehäuses (100) angebracht ist;
einen Permanentmagneten (132), der auf der Drehwelle (131) angebracht ist;
ein erstes Lager (134), um einen Endabschnitt der Drehwelle (131) zu stützen; und
ein zweites Lager (135), um einen anderen Endabschnitt der Drehwelle (131) zu stützen,
wobei das Laufrad (136) drehbar auf der Drehwelle (131) angebracht ist und auf einer Stromabwärtsseite des Permanentmagneten (132) bezogen auf die Strömungsrichtung der Luft angeordnet ist,
wobei die Drehwelle (131) einen Laufrad-Befestigungsabschnitt (1315) aufweist, um das Laufrad (136) zu stützen,
wobei der Laufrad-Befestigungsabschnitt (1315) zwischen dem ersten Lager (134) und dem zweiten Lager (135) angeordnet ist, und
wobei das Laufrad (136) so angeordnet ist, dass es das zweite Lager (135) abdeckt.

9. Elektromotor nach einem der Ansprüche 1 bis 8, wobei das Gehäuse (100) aufweist:
einen ersten Aufnahmeteil (101), um die Rotoranordnung (130) und die Statoranordnung (110) aufzunehmen; und
einen zweiten Aufnahmeteil (102), der auf einer Stromabwärtsseite des ersten Aufnahmeteils (101) bezogen auf eine Strömungsrichtung der Luft angeordnet ist, wobei der zweite Aufnahmeteil (102) das Laufrad (136) aufnimmt;
einen Einlassteil (106), der auf einer Stromaufwärtsseite des ersten Aufnahmeteils (101) bezogen auf die Strömungsrichtung der Luft angeordnet ist und mehrere Seitenöffnungen (107) aufweist, die mit der Außenseite des Gehäuses (100) in Verbindung stehen, wobei der Einlassteil (106) die Luft von der Außenseite des Gehäuses (100) in die Statoranordnung (110) ansaugt, und
wobei der Umgehungsströmungsweg (109) mit den mehreren Seitenöffnungen (107) in Verbindung steht.

10. Elektromotor nach einem der Ansprüche 1 bis 9, wobei die Statoranordnung (110) aufweist:
ein hinteres Joch (112), das in einer kreisförmigen Ringform ausgebildet ist;
mehrere Zähnen (114), die an einer Innenumfangsfläche des hinteren Jochs (112) angebracht sind; und
mehrere Statorspulen, die jeweils auf die mehreren Zähne (114) gewickelt sind,
wobei das hintere Joch (112) zwischen dem Umgehungsströmungsweg (109) und dem inneren Strömungsweg (108) angeordnet ist,
wobei die mehreren inneren Strömungswege (108) durch das Innere des hinteren Jochs (112) in axialer Richtung ausgebildet sind, und
wobei der Umgehungsströmungsweg (109) zwischen der Innenumfangsfläche des Gehäuses (100) und einer Außenumfangsfläche des hinteren Jochs (112) definiert ist.

11. Elektromotor nach einem der Ansprüche 1 bis 10, der ferner aufweist:
eine erste Gehäuseabdeckung (120), die an einer Seite des Gehäuses (100) angebracht ist und ein erstes Lager (134) darin aufweist; und
eine zweite Gehäuseabdeckung (1210), die an einer anderen Seite des Gehäuses (100) angebracht ist und ein zweites Lager (135) darin aufweist,
wobei das Laufrad (136) zwischen dem ersten Lager (134) und dem zweiten Lager (135) angeordnet ist, und
wobei die erste Gehäuseabdeckung (120) aufweist:
einen Außenringabschnitt (1201);
einen ersten Lageraufnahmeabschnitt (1203), der an einem inneren mittleren Abschnitt des Außenringabschnitts (1201) angeordnet ist und das erste Lager (134) aufnimmt;
mehrere Verbindungsabschnitte (1204), die sich radial von einer Innenumfangsfläche des Außenringabschnitts (1201) zu einer Außenumfangsfläche des ersten Lageraufnahmeabschnitts (1203) erstrecken, um den Außenringabschnitt (1201) und den ersten Lageraufnahmeabschnitt (1203) zu verbinden; und mehrere axiale Durchgangsbohrungen (1205), die zwischen den mehreren Verbindungsabschnitten (1204) in axialer Richtung ausgebildet sind, und
wobei der Umgehungsströmungsweg (109) und die axialen Durchgangsbohrungen (1205) so angeordnet sind, dass sie sich in axialer Richtung überlappen und miteinander in Verbindung stehen.

12. Elektromotor nach Anspruch 11, wobei die zweite Gehäuseabdeckung (1210) aufweist:
eine äußere Abdeckung (1211);
eine erste innere Nabe (1212), die innerhalb der äußeren Abdeckung (1211) angeordnet ist;
einen zweiten Lageraufnahmeabschnitt (1214), der von einer Seite der ersten inneren Nabe (1212) zum Laufrad (136) vorsteht und das zweite Lager (135) aufnimmt;
mehrere erste Schaufeln (1213), die spiralförmig von einer Außenumfangsfläche der ersten inneren Nabe (1212) zu einer Innenumfangsfläche der äußeren Abdeckung (1211) vorstehen, um die äußere Abdeckung (1211) und die erste innere Nabe (1212) miteinander zu verbinden;
eine zweite innere Nabe (1220), die innerhalb der äußeren Abdeckung (1211) aufgenommen ist und in Reihe mit der ersten inneren Nabe (1212) angeordnet ist; und
mehrere zweite Schaufeln (1222), die spiralförmig von einer Außenumfangsfläche der zweiten inneren Nabe (1220) zur Innenumfangsfläche der äußeren Abdeckung (1211) vorstehen.

13. Elektromotor nach Anspruch 11 oder 12, der ferner einen Wechselrichter (1250) aufweist, der mit einem IGBT und einem Kondensator versehen ist, um die Drehzahl des Elektromotors zu steuern,
wobei der Wechselrichter (1250) aufweist:
eine Leiterplatte (PCB) (1251), auf der der IGBT und der Kondensator angebracht sind und die von einer Seite der ersten Gehäuseabdeckung (120) in axialer Richtung beabstandet ist;
mehrere erste Kopplungsabschnitte (1202), die vom Außenringabschnitt (1201) zur PCB (1251) vorstehen;
mehrere zweite Kopplungsabschnitte (1252), die jeweils von einem Randabschnitt der PCB (1251) zu den mehreren ersten Kopplungsabschnitten (1202) vorstehen, um mit den mehreren ersten Kopplungsabschnitten (1202) gekoppelt zu werden; und
mehrere laterale Strömungswege (1253), die zwischen der PCB (1251) und dem Gehäuseabdeckung (120) definiert sind, so dass die Luft eingeleitet wird, wobei die mehreren lateralen Strömungswege (1253) zwischen den mehreren zweiten Kopplungsabschnitten (1252) in radialer Richtung ausgebildet ist, und
wobei die mehreren lateralen Strömungswege (1253) und die mehreren axialen Durchgangsbohrungen (1205) miteinander in Verbindung stehen.

## Revendications

1. Moteur électrique, comprenant :
un carter (100) ;
un ensemble de stator (110) logé dans le carter (100) ;
un ensemble de rotor (130) monté de manière rotative à l'intérieur de l'ensemble de stator (110) ;
une turbine (136) recevant de l'énergie de l'ensemble de rotor (130) pour générer un flux d'air ;
un trajet d'écoulement intérieur (108) défini dans l'ensemble de stator (110) de sorte qu'une partie de l'air traverse l'ensemble de stator (110) ;
un trajet de dérivation (109) défini dans le carter (100) et disposé sur un côté extérieur de l'ensemble de stator (110) de sorte qu'une autre partie de l'air contourne l'ensemble de stator (110) ;
une première partie de réception (101) destinée à loger l'ensemble de rotor (130) et l'ensemble de stator (110) ; et
une deuxième partie de réception (102) disposée en aval de la première partie de réception (101) dans la direction d'écoulement de l'air, ladite deuxième partie de réception (102) recevant la turbine (136) ;
une partie de col (104) disposée entre la première partie de réception (101) et la deuxième partie de réception (102), et ayant un diamètre inférieur à celui de la première partie de réception (101) ; et
une partie inclinée (105) formée en inclinaison depuis la première partie de réception (101) vers la partie de col (104), et
où le trajet de dérivation (109) est défini entre une surface circonférentielle intérieure de la première partie de réception (101) et une surface circonférentielle extérieure de l'ensemble de stator (110),
où la partie inclinée (105) est prévue entre une extrémité inférieure de la première partie de réception (101) et la partie de col (104),
où la surface intérieure de la partie de col (104) est arrondie avec une forme courbe, la partie de col (104) présentant une courbure inférieure à la courbure d'une partie de raccordement entre la première partie de réception (101) et la partie inclinée (105),
où la partie de col (104) est raccordée à une partie d'extrémité supérieure de la deuxième partie de réception (102), ladite partie de col (104) étant la partie présentant le plus petit diamètre parmi les diamètres du trajet d'écoulement intérieur traversant l'intérieur du carter (100),
où la deuxième partie de réception (102) a une forme conique, ladite deuxième partie de réception (102) étant formée de sorte que son diamètre augmente progressivement de haut en bas, l'extrémité supérieure de la deuxième partie de réception (102) ayant un diamètre inférieur à celui de l'extrémité inférieure de la deuxième partie de réception (102), les termes « supérieur » et « inférieur » étant définis par rapport à la direction d'écoulement de l'air, le côté supérieur correspondant à l'amont et le côté inférieur à l'aval.

2. Moteur électrique selon la revendication 1, où le trajet de dérivation (109) est formé dans une surface circonférentielle intérieur du carter (100) de manière à être en retrait radialement vers l'extérieur, ledit trajet de dérivation (109) étant disposé sur un côté extérieur du trajet d'écoulement intérieur (108).

3. Moteur électrique selon la revendication 1 ou la revendication 2, où le trajet de dérivation (109) est situé en amont de la turbine (136) par rapport à la direction d'écoulement de l'air.

4. Moteur électrique selon l'une des revendications 1 à 3, comprenant en outre une pluralité de parties de support (1090) faisant saillie radialement vers l'intérieur à partir d'une surface circonférentielle intérieure du carter (100) de manière à supporter une surface circonférentielle extérieure de l'ensemble de stator (110),
où le trajet de dérivation (109) est prévues en pluralité entre les parties de la pluralité de parties de support (1090), la pluralité de trajets de dérivation (109) s'étendant dans la direction circonférentielle du carter (100) et étant formés à travers le carter (100) dans la direction axiale dudit carter (100), et
où les trajets de la pluralité de trajets de dérivation (109) sont espacés les uns des autres par des intervalles égaux dans la direction circonférentielle du carter.

5. Moteur électrique selon la revendication 4, où le trajet de dérivation (109) présente une longueur circonférentielle supérieure à la largeur radiale du trajet de dérivation (109) et à la largeur circonférentielle de la partie de support (1090).

6. Moteur électrique selon la revendication 4 ou la revendication 5, comprenant en outre une nervure de support (2094) s'étendant dans la direction circonférentielle de manière à entourer la surface circonférentielle extérieure de l'ensemble de stator (110), ladite nervure de support (2094) reliant la pluralité de parties de support (1090),
où le trajet de dérivation (109) est défini entre la surface circonférentielle intérieure du carter (100) et la surface circonférentielle extérieure de la nervure de support (2094).

7. Moteur électrique selon l'une des revendications 1 à 6, où le trajet de dérivation (109) présente une forme annulaire, une forme arquée ou une forme polygonale.

8. Moteur électrique selon l'une des revendications 1 à 7, où l'ensemble de rotor (130) comprend :
un arbre rotatif (131) monté de manière rotative dans une partie centrale du carter (100) ;
un aimant permanent (132) monté sur l'arbre rotatif (131) ;
un premier palier (134) destiné à supporter une extrémité de l'arbre rotatif (131) ; et
un deuxième palier (135) destiné à supporter l'autre extrémité de l'arbre rotatif (131), où la turbine (136) est montée de manière rotative sur l'arbre rotatif (131) et est disposée en aval de l'aimant permanent (132) dans la direction d'écoulement de l'air,
où l'arbre rotatif (131) comprend une partie de montage de turbine (1315) destinée à supporter la turbine (136),
où la partie de montage de turbine (1315) est disposée entre le premier palier (134) et le deuxième palier (135), et
où la turbine (136) est disposée de manière à recouvrir le deuxième palier (135).

9. Moteur électrique selon l'une des revendications 1 à 8, où le carter (100) comprend :
une première partie de réception (101) destinée à recevoir l'ensemble de rotor (130) et l'ensemble de stator (110) ; et
une deuxième partie de réception (102) disposée en aval de la première partie de réception (101) dans la direction d'écoulement de l'air, ladite deuxième partie de réception (102) recevant la turbine (136) ;
une partie d'admission (106) disposée en amont de la première partie de réception (101) dans la direction d'écoulement de l'air, et présentant une pluralité d'orifices latéraux (107) communiquant avec l'extérieur du carter (100), ladite partie d'admission (106) aspirant l'air de l'extérieur du carter (100) vers l'ensemble de stator (110), et
où le trajet de dérivation (109) communique avec la pluralité d'orifices latéraux (107).

10. Moteur électrique selon l'une des revendications 1 à 9, où l'ensemble de stator (110) comprend :
une culasse arrière (112) formée en anneau circulaire ;
une pluralité de dents (114) montées sur une surface circonférentielle intérieure de la culasse arrière (112) ; et
une pluralité de bobines de stator enroulées sur la pluralité de dents (114) respectives, où la culasse arrière (112) est disposée entre le trajet de dérivation (109) et le trajet d'écoulement intérieur (108),
où la pluralité de trajets d'écoulement intérieurs (108) est formée à travers l'intérieur de la culasse arrière (112) dans la direction axiale, et
où le trajet de dérivation (109) est défini entre la surface circonférentielle intérieure du carter (100) et la surface circonférentielle extérieure de la culasse arrière (112).

11. Moteur électrique selon l'une des revendications 1 à 10, comprenant en outre :
un premier couvercle de carter (120) monté sur un côté du carter (100) et comprenant un premier palier (134) intérieur ; et
un deuxième couvercle de carter (1210) monté sur un autre côté du carter (100) et comprenant un deuxième palier (135) intérieur,
où la turbine (136) est disposée entre le premier palier (134) et le deuxième palier (135), et
où le premier couvercle de carter (120) comprend :
une partie annulaire extérieure (1201) ;
une première partie de réception de palier (1203) disposée dans une partie centrale intérieure de la partie annulaire extérieure (1201) et recevant le premier palier (134) ;
une pluralité de parties de connexion (1204) s'étendant radialement depuis une surface circonférentielle intérieure de la partie annulaire extérieure (1201) vers une surface circonférentielle extérieure de la première partie de réception de palier (1203), de manière à relier la partie annulaire extérieure (1201) et la première partie de réception de palier (1203) ; et
une pluralité de trous traversants axiaux (1205) ménagés entre la pluralité de parties de connexion (1204) dans la direction axiale, et
où le trajet de dérivation (109) et les trous traversants axiaux (1205) sont disposés de manière à se chevaucher dans la direction axiale, et communiquent entre eux.

12. Moteur électrique selon la revendication 11, où le deuxième couvercle de carter (1210) comprend :
un couvercle extérieur (1211) ;
un premier moyeu intérieur (1212) disposé à l'intérieur du couvercle extérieur (1211) ;
une deuxième partie de réception de palier (1214) faisant saillie depuis un côté du premier moyeu intérieur (1212) en direction de la turbine (136), et recevant le deuxième palier (135) ;
une pluralité de premières aubes (1213) faisant saillie en spirale depuis une surface circonférentielle extérieure du premier moyeu intérieur (1212) vers une surface circonférentielle intérieure du couvercle extérieur (1211), de manière à relier le couvercle extérieur (1211) et le premier moyeu intérieur (1212) ;
un deuxième moyeu intérieur (1220) logé à l'intérieur du couvercle extérieur (1211) et disposé en série avec le premier moyeu intérieur (1212) ; et
une pluralité de deuxièmes aubes (1222) faisant saillie en spirale depuis une surface circonférentielle extérieure du deuxième moyeu intérieur (1220) vers la surface circonférentielle intérieure du couvercle extérieur (1211).

13. Moteur électrique selon la revendication 11 ou la revendication 12, comprenant en outre un onduleur (1250) muni d'un IGBT et d'un condensateur, pour commander la vitesse du moteur électrique,
où l'onduleur (1250) comprend :
une carte de circuit imprimé (PCB) (1251) sur laquelle sont montés l'IGBT et le condensateur, et espacée d'un côté du premier couvercle de carter (120) dans la direction axiale ;
une pluralité de premières parties d'accouplement (1202) faisant saillie depuis la partie annulaire extérieure (1201) en direction de la carte de circuit imprimé (1251) ;
une pluralité de deuxièmes parties d'accouplement (1252) faisant saillie depuis une partie de bord de la carte de circuit imprimé (1251) vers la pluralité de premières parties d'accouplement (1202) respectives, de manière à être accouplées à la pluralité de premières parties d'accouplement (1202) ; et
une pluralité de trajets d'écoulement latéraux (1253) définis entre la carte de circuit imprimé (1251) et le premier couvercle de carter (120) de manière à permettre l'introduction d'air, la pluralité de trajets d'écoulement latéraux (1253) étant formés entre les parties d'accouplement de la pluralité de deuxièmes parties d'accouplement (1252) dans une direction radiale, et
où la pluralité de trajets d'écoulement latéraux (1253) et la pluralité de trous traversants axiaux (1205) communiquent entre eux.
